# EUROPEAN PATENT APPLICATION

(11) **EP 4 131 977 A1**
(43) Date of publication of application: **08.02.2023**
(21) Application number: 21781836.8
(22) Date of filing: 22.03.2021
(51) Int. Cl.: H04N 21/27, H04N 5/222, H04N 5/232

(54) **LIVE VIDEO PRODUCTION SYSTEM, LIVE VIDEO PRODUCTION METHOD, AND CLOUD SERVER**

(30) Priority: 31.03.2020 JP 2020065090
(71) Applicant: Sony Group Corporation, Minato-Ku, Tokyo, 108-0075 (JP)
(72) Inventor: SAITO, Kenichi, Tokyo 108-0075 (JP); OZAKI, Norimasa, Tokyo 108-0075 (JP); KURE, Yoshinobu, Tokyo 108-0075 (JP)
(74) Representative: D Young & Co LLP
(86) International application number: PCT/JP2021/011571
(87) International publication number: WO 2021/200304

(57) **Abstract**

A live video production system according to the present disclosure includes a plurality of cameras whose imaging operation is controlled according to a remote control signal, and a cloud server that receives individual video signals obtained by imaging by the plurality of cameras and transmits a main line video signal based on the individual video signals. The cloud server obtains the main line video signal by output control of a video based on a plurality of received individual video signals according to a first operation signal that is an operation signal related to editing of a video received from an outside, and transmits the remote control signal for at least one of the plurality of cameras according to a second operation signal that is an operation signal related to control of a camera received from the outside.

## Description

### TECHNICAL FIELD

The present disclosure relates to a live video production system, a live video production method, and a cloud server.

### BACKGROUND ART

Techniques for producing video content are known. Among them, a technique for producing video content using a virtual function (for example, an editing function or the like) on a cloud server is known.

### CITATION LIST

### PATENT DOCUMENT

Patent Document 1: Japanese Patent Application Laid-Open No. 2015-056761

### SUMMARY OF THE INVENTION

### PROBLEMS TO BE SOLVED BY THE INVENTION

According to the related art, editing of existing content is achieved by cloud computing through communication between a user terminal and a content producing device.

However, in the related art, it is an object to improve efficiency by reducing a burden of editing of existing content by a user, and for example, video production when live broadcast or distribution of a video imaged by a camera arranged in a stadium or the like is not considered. It is also desired to improve efficiency in such live video production.

Therefore, the present disclosure proposes a live video production system, a live video production method, and a cloud server that can improve efficiency of live video production.

### SOLUTIONS TO PROBLEMS

In order to solve the above problem, a live video production system according to an aspect of the present disclosure includes a plurality of cameras whose imaging operation is controlled according to a remote control signal, and a cloud server that receives individual video signals obtained by imaging by the plurality of cameras and transmits a main line video signal based on the individual video signals, in which the cloud server obtains the main line video signal by output control of a video based on a plurality of received individual video signals according to a first operation signal that is an operation signal related to editing of a video received from an outside, and transmits the remote control signal for at least one of the plurality of cameras according to a second operation signal that is an operation signal related to control of a camera received from the outside.

### BRIEF DESCRIPTION OF DRAWINGS

Fig. 1 is a diagram illustrating an example of live video processing according to a first embodiment of the present disclosure.
Fig. 2 is a diagram illustrating a configuration example of a live video production system according to the first embodiment of the present disclosure.
Fig. 3 is a diagram illustrating an example of the live video production system according to the first embodiment of the present disclosure.
Fig. 4 is a diagram illustrating a configuration example of a cloud server according to the first embodiment of the present disclosure.
Fig. 5 is a flowchart illustrating an example of processing of the live video production system according to the first embodiment.
Fig. 6 is a diagram illustrating an example of a live video production system according to a second embodiment of the present disclosure.
Fig. 7 is a diagram illustrating a configuration example of the live video production system according to the second embodiment of the present disclosure.
Fig. 8A is a diagram illustrating an example of power supply to a video camera.
Fig. 8B is a diagram illustrating an example of power supply to the video camera.
Fig. 8C is a diagram illustrating an example of power supply to the video camera.
Fig. 9 is a diagram illustrating an example of processing in the live video production system.
Fig. 10 is a diagram illustrating an example of processing in CCU hardware.
Fig. 11 is a view illustrating an example of development processing in a single plate method.
Fig. 12 is a diagram illustrating an example of processing in a video camera of a three-plate method.
Fig. 13 is a diagram illustrating an example of development processing in the three-plate method.
Fig. 14 is a diagram illustrating an example of a live video production system according to a third embodiment of the present disclosure.
Fig. 15 is a diagram illustrating a configuration example of the live video production system according to the third embodiment of the present disclosure.
Fig. 16 is a diagram illustrating an example of a configuration of the live video production system of the present disclosure.
Fig. 17 is a hardware configuration diagram illustrating an example of a computer that implements functions of the cloud server.

### MODE FOR CARRYING OUT THE INVENTION

Hereinafter, embodiments of the present disclosure will be described in detail on the basis of the drawings. Note that the live video production system, the live video production method, and the cloud server according to the present application are not limited by this embodiment. Furthermore, in each of the following embodiments, the same parts are denoted by the same reference numerals, and redundant description will be omitted.

The present disclosure will be described according to the following order of items.
1. First embodiment
   1-1. Outline of live video system according to first embodiment of present disclosure
      1-1-1. Part 1 of live video production system of present disclosure
         1-1-1-1. Imaging
         1-1-1-2. Production
         1-1-1-3. Broadcast
         1-1-1-4. Distribution
      1-1-2. Part 2 of live video system of present disclosure
      1-1-3. Comparison and effects and the like
   1-2. Configuration of live video production system according to first embodiment
      1-2-1. Example of live video production system according to first embodiment
         1-2-1-1. Configuration of cloud server according to first embodiment
      1-2-2. Operation of each operator and operation of each function
         1-2-2-1. Replay
         1-2-2-2. GFX
         1-2-2-3. Edit
         1-2-2-4. SWer (switcher)
         1-2-2-5. VE
         1-2-2-6. CO
      1-2-3. Another functional example in live video production system
         1-2-3-1. Functions of cloud server
         1-2-3-2. Functions in master control room
         1-2-3-3. Functions in studio
      1-2-4. Others
         1-2-4-1. Data communication
         1-2-4-2. Synchronization of signals
         1-2-4-3. VE/CO assistance function (intercom)
   1-3. Procedure of live video processing according to first embodiment
2. Second embodiment
   2-1. Outline of live video production system according to second embodiment of present disclosure
   2-2. Configuration of live video production system according to second embodiment
   2-3. Example of power supply to video camera
      2-3-1. First supply example
      2-3-2. Second supply example
      2-3-3. Third supply example
   2-4. Processing example in live video production system
      2-4-1. Processing in live video production system
      2-4-2. Processing in CCU hardware
      2-4-3. Development processing
      2-4-4. Three-plate method
      2-4-5. Development processing (three-plate method)
3. Third embodiment
   3-1. Outline of live video production system according to third embodiment of present disclosure
   3-2. Configuration of live video production system according to third embodiment
4. Other embodiments
   4-1. Other configuration examples
   4-2. Others
5. Effects according to present disclosure
6. Hardware configuration

### [1. First embodiment]

### [1-1. Overview of live video system according to first embodiment of present disclosure]

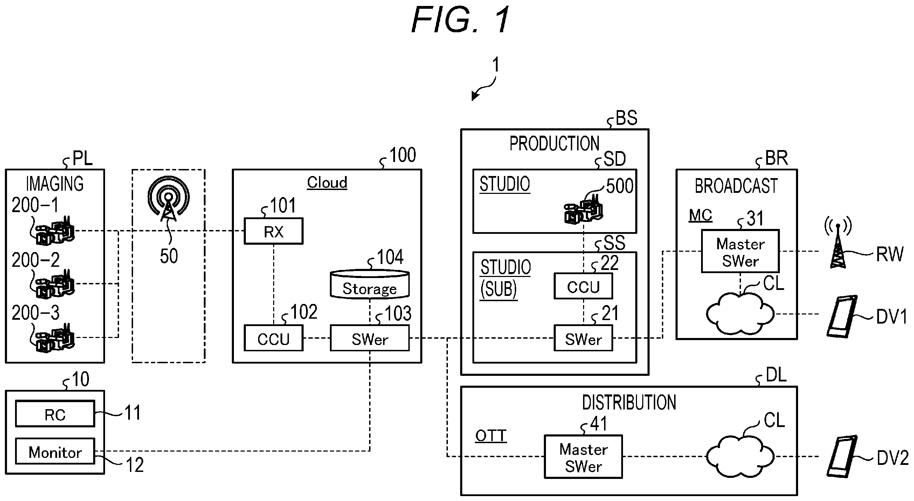

Fig. 1 is a diagram illustrating an example of a live video system according to a first embodiment of the present disclosure. Furthermore, Fig. 1 is a diagram illustrating a configuration example of a live video production system 1 according to the first embodiment of the present disclosure. The live video processing according to the first embodiment of the present disclosure is implemented by the live video production system 1 illustrated in Fig. 1. Note that although live video production will be described below as an example of sports production, the live video production system 1 is not limited to sports production, and may be used for production of live videos of various targets.

### [1-1-1. Part 1 of live video production system of present disclosure]

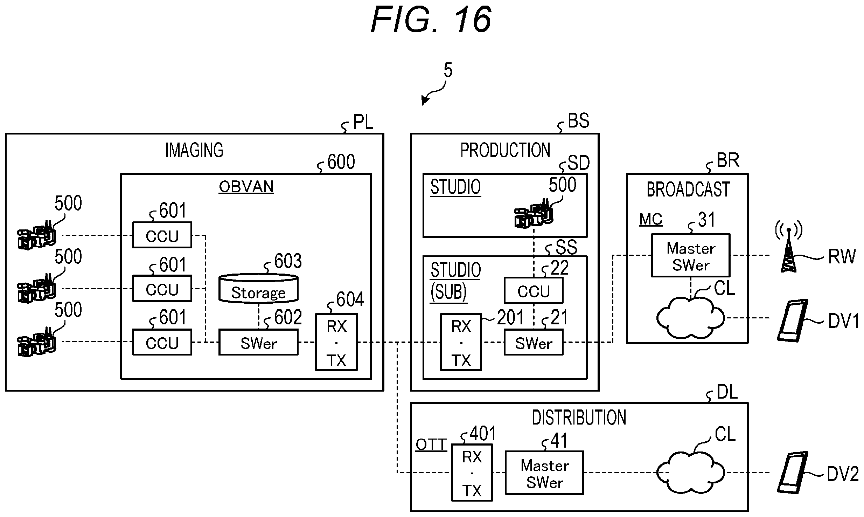

First, a live video production system 5 of the present disclosure will be described with reference to Fig. 16. Fig. 16 is a diagram illustrating an example of a configuration of a live video production system of the present disclosure.

The live video production system 5 includes various devices related to an imaging PL such as a plurality of video cameras 500 and an OBVAN 600, various devices related to a production BS, various devices related to a distribution DL, and various devices related to a broadcast BR. First, each of the devices illustrated in the live video production system 5 will be briefly described. In the live video production system 5, in terms of location, the devices are arranged at a site such as a stadium, a broadcast station, an over-the-top (OTT), a base provided with a terminal device 10 in or outside the broadcast station, or the like. A device related to the imaging PL is arranged at a site, a device related to the production BS or broadcast BR is arranged at a broadcast station, and a device related to the distribution DL is arranged at an OTT facility. A dotted line connecting respective components such as devices in Fig. 16 indicates a video signal. Furthermore, the devices illustrated in Fig. 16 are part of the devices included in the live video production system 5, and the live video production system 5 is not limited to the devices illustrated in Fig. 16, and includes various devices necessary for implementing functions. Communication is performed between the imaging PL and the production BS by functions of a transmission-reception device RX/TX 604 on the imaging PL side and a transmission-reception device RX/TX 201 on the production BS side. Furthermore, communication is performed between the imaging PL and the distribution DL by the functions of the transmission-reception device RX/TX 604 on the imaging PL side and a transmission-reception device RX/TX 401 on the distribution DL side. For example, transmission from the imaging PL side to the production BS or the distribution DL side is transmission by ultra high frequency (UHF) or microwave using a wireless relay transmission device (field pickup unit (FPU)) provided in the OBVAN 600.

The live video production system 5 includes a plurality of video cameras 500, the OBVAN 600, and the like as various devices related to the imaging PL. The video cameras 500 image a subject. For example, the video cameras 500 of the imaging PL is a video camera arranged in a competition venue (stadium). Note that while Fig. 16 illustrates three video cameras 500 for the imaging PL, the number of video cameras 500 for the imaging PL is not limited to three, and may be four or more or two or less. For example, the live video production system 5 can produce live video for the broadcast station and the OTT at the same time (simultaneously). The live video production system 5 can improve efficiency of live video production by simultaneously producing the live video for the broadcast station and the OTT.

The OBVAN 600 is an automobile on which equipment for recording and transmitting a live video is mounted, that is, an outside broadcast van. In the OBVAN 600, various devices such as a plurality of camera control units (CCUs) 601, a SWer 602, and a storage 603 are mounted. Note that although only the plurality of CCUs 601, the SWer 602, and the storage 603 are illustrated in Fig. 16, various devices related to live video production are mounted in the OBVAN 600 in addition to the plurality of CCUs 601, the SWer 602, and the storage 603. This point will be described later in detail.

The CCUs 601 are devices used to supply power to respective video cameras and perform control and adjustment related to the respective video cameras. In the example of Fig. 16, three CCUs 601 respectively corresponding to three video cameras 500 are illustrated, but the number of CCUs 601 of the imaging PL is not limited to three, and may be two or less.

The SWer 602 is a device that switches video signals, a so-called switcher. The SWer 602 switches a video signal to be transmitted (sent) at a video production or relay site. Note that "switching of a video signal" means that one video signal is selected from a plurality of video signals and output. The storage 603 is a storage device that stores various types of information (data). For example, the storage 603 stores video, metadata, and the like imaged by each video camera 500. The SWer 602 switches the video signal to be transmitted to the SWer 21 of the production BS. Furthermore, the SWer 602 switches the video signal to be transmitted to a MasterSWer 41 of the distribution DL.

The live video production system 5 includes a video camera 500, a SWer 21, a CCU 22, and the like as various devices related to the production BS. For example, the video camera 500 of the production BS is a video camera (system camera) arranged in a studio SD. The SWer 21 is a switcher and is arranged in a sub-studio SS. The CCU 22 is arranged in the sub-studio SS. Note that the arrangement of the respective devices of the production BS is an example, and the respective devices are arranged at various places according to the configuration of the production BS and the like.

The live video production system 5 includes a MasterSWer 31 and the like as various devices related to the broadcast BR. For example, the MasterSWer 31 is a switcher and is arranged in a facility of a business operator that provides a broadcast service such as a main adjustment room (master control room) MC.

The live video production system 5 includes, as various devices related to the distribution DL, the MasterSWer 41, a distribution server, and the like. For example, the MasterSWer 41 is a switcher and is arranged in a facility of a business operator that provides an OTT service.

### [1-1-1-1. Imaging]

Details of each component of the live video production system 5 will now be described. First, the imaging PL will be described. Various devices related to the imaging PL are used by a business operator that produces a live video. The various devices related to the imaging PL are used by, for example, a broadcast station or a production company. Hereinafter, a case where a business operator that uses various devices related to the imaging PL is a production company will be described as an example.

The production company receives a request for video production from a content holder having broadcast rights or a broadcast station that has concluded a broadcast right contract with the content holder. For example, the production company that has received the video production request prepares devices necessary for video production such as the video cameras 500 in the competition venue where the target competition is held, and produces a desired video. In the example of Fig. 1, the production company arranges the video cameras 500 in the competition venue and arranges the OBVAN 600 in the vicinity of the competition venue.

The video cameras 500 installed in the competition venue are connected to the OBVAN 600 via optical fiber cables or dedicated coaxial cables. In this case, in the example of Fig. 16, the video camera 500 and the OBVAN 600 are connected via an optical fiber cable or a dedicated coaxial cable. Note that the video cameras 500 and the OBVAN 600 may be directly connected, or may be indirectly connected by connecting the video cameras 500 to input terminals installed in the competition venue, and connecting a distribution board also installed in the competition venue and the OBVAN 600.

Devices necessary for video production other than the video cameras 500 are installed in the OBVAN 600. The OBVAN 600 illustrated in Fig. 16 has a configuration in which components other than the CCU 601 and the SWer 602 are omitted, but the OBVAN 600 includes various devices other than the CCU and the SWer. For example, the OBVAN 600 is provided with CCUs, a switcher (SWer/Mixier/Tally), a video server (Video), a replay server (Replay), an editor (Edit), graphics (GFX), a monitor, and a synchronization signal generator. Note that, in Fig. 16, illustration of the video server (Video), the replay server (Replay), the editor (Edit), the graphic (GFX), and the monitor is omitted.

The CCU 601 has functions of supplying power to each corresponding video camera and operating and managing setting information of a diaphragm (Iris) and the like, and an operator (for example, a video engineer (VE)) performs necessary image quality adjustment so as not to generate discomfort at the time of switching each video signal. The VE is an operator who performs adjustment, setting, and the like of a video camera and various video devices. For example, the VE operates the plurality of CCUs while watching videos of the respective video cameras displayed on a plurality of monitors installed in the OBVAN corresponding to the respective video cameras. Note that image quality adjustment itself based on the control command from the CCU is executed by the video camera. In the example of Fig. 16, the VE as the operator gets on the OBVAN 600 and performs various operations as described above. As described above, in the live video production system 5, a large number of VEs get on the OBVAN 600 and are sent to the vicinity of an imaging site.

Furthermore, the video signal of each video camera 500 is input from the corresponding CCU 601 to the switcher, the video server, the replay server, or the editor via a router, and necessary processing is performed by an operation of an operator of each device. Here, the video signals are synchronized (generator lock) on the basis of a synchronization signal output from the synchronization signal generator.

The SWer 602 which is a switcher switches a video signal (also includes video signals processed by Edit and GFX) of each video camera 500 or a signal of a highlight video or a slow video produced by the replay server according to an operation of the operator, and transmits the switched signal to the broadcast station (studio) or a distribution server (OTT). Hereinafter, a video signal obtained by imaging by the video cameras 500 and 200 may be referred to as an individual video signal or a video signal, and a video signal processed by Edit, GFX or Replay may be referred to as a processed video signal or an edited video signal. In addition, a video signal output from the SWer 103 of the cloud server 100 or the SWer 602 of the OBVAN 600 as described later and input to the SWer 21 of the production station BS may be referred to as a main line video signal or a first main line video signal. Furthermore, a video signal output from the MasterSWers 31 and 41 and transmitted as television broadcast by a radio tower RW or the like, or distributed to a device DV1 via a cloud CL may be described as a main line video signal or a second main line video signal. Note that, in a case where the video signals are described without being particularly distinguished, for example, such as is a case of a dotted line or the like in the drawings, the video signals are described as video signals. Note that, in the description of a case of display or the like, the video signal may be simply referred to as a video.

Note that, in the example of Fig. 16, it is configured such that the video signal (first main line video signal) is transmitted from a transmitter (TX) of the OBVAN 600 to a receiver (RX) of the studio, and is output from a master switcher in a master control room (main adjustment room) via a switcher of the studio as a video signal for broadcast (second main line video signal). That is, in the example of Fig. 16, the first main line video signal from the OBVAN 600 is transmitted to the MasterSWer 31 of the broadcast BR via the SWer 21 of the production BS. However, for example, depending on the content of production, the switcher (SWer 602) of the OBVAN 600 may directly supply the video for broadcast without going through the studio. In this case, for example, the first main line video signal from the OBVAN 600 may be directly transmitted to the MasterSWer 31 of the broadcast BR without going through the studio (production BS).

### [1-1-1-2. Production]

Next, the production BS will be described. Various devices related to the production BS are used by the business operator who produces content related to live video. The various devices related to the production BS are used by, for example, the broadcast station. The various devices related to the production BS are used by, for example, a production division or an affiliated station of the broadcast station.

The first main line video signal (video produced by the production company) transmitted from the TX of the OBVAN 600 is received by RX of the broadcast station (production BS). In a case where a video outside the competition venue is also included in the video production, imaging in a studio is also performed. For example, in a case where a video such as an explanation scene is also included, imaging is also performed in the studio SD or the like illustrated in Fig. 16. In this case, the studio video signal and the first main line video signal output from the OBVAN 600 are input to the switcher 21 of the studio (sub). The studio (sub) is also referred to as a sub-adjustment room (reception sub). The individual video signal obtained by imaging by the video camera 500 of the studio SS or the first main line video signal output from the OBVAN 600 is input to the SWer 21 of the sub-studio SS which is the studio (sub) illustrated in Fig. 16.

Furthermore, the studio (sub) may have the same functions (Replay, Edit, GFX, and the like) as part of the functions in the OBVAN, and the processed video signal processed by these functions is also input to the switcher. The switcher (for example, the SWer 21) switches the video signal such as the input individual video signal and the processed video signal, and outputs the first main line video signal to the master switcher (for example, the MasterSWer 31) of the master control (main adjustment room). The master switcher is a switcher that outputs a second main line video signal for broadcast.

### [1-1-1-3. Broadcast]

Next, the broadcast BR will be described. Various devices related to the broadcast BR are used by a business operator that broadcasts a live video. The various devices related to the broadcast BR are used by, for example, the broadcast station. The various devices related to the broadcast BR are used by, for example, a transmitting division or a key station of the broadcast station.

The second main line video signal output from the master switcher (for example, the MasterSWer 31) is transmitted as television broadcast. For example, the second main line video signal output from the MasterSWer 31 is transmitted as television broadcast by the radio tower RW or the like. The second main line video signal output from the master switcher may be webcasted via a cloud server. For example, the second main line video signal output from the master switcher is distributed to the device DV1 which is a terminal device used by the viewer via the cloud CL. Note that the cloud CL may be outside the broadcast BR instead of inside the broadcast BR. For example, the device DV1 may be a device such as a notebook personal computer (PC), a desktop PC, a smartphone, a tablet terminal, a mobile phone, or a personal digital assistant (PDA).

### [1-1-1-4. Distribution]

Next, the distribution DL will be described. Various devices related to the distribution DL are used by a business operator that distributes a live video. The various devices related to the distribution DL are used by, for example, a distributor. The various devices related to the distribution DL are used by, for example, a business operator that provides an OTT service.

The first main line video signal output from the OBVAN 600 is input to an OTT server. The OTT server distributes the video produced via the master switcher using the Internet, similarly to the broadcast station (transmitting division). In the example of Fig. 16, the video is distributed via the MasterSWer 41 which is a master switcher of the distribution DL. For example, the video signal (first main line video signal) input to the master switcher is distributed to a device DV2, which is a terminal device used by the viewer, via the cloud CL.

Here, in the distribution DL, similarly to the broadcast station (production division) described above, a studio may be separately provided and the imaged video may also be included in the produced video. Furthermore, the number of videos produced and distributed is not limited to one, and may be plural.

### [1-1-2. Part 2 of live video system of present disclosure]

Returning to Fig. 1, the live video production system 1 of the present disclosure will now be described. Note that, in the live video production system 1, description of points similar to those of the live video production system 5 will be omitted as appropriate. In the following examples, it is possible to improve the efficiency of live video production by using a cloud or multi-access edge computing (MEC) as described later. For example, the live video production system 1 can improve the efficiency of live video production by using the cloud server 100.

The live video production system 1 includes various devices related to the imaging PL such as a plurality of video cameras 200, the cloud server 100, the terminal device 10, the various devices related to the production BS, various devices related to the distribution DL, and the various devices related to the broadcast BR. First, each device illustrated in the live video production system 1 will be briefly described. Note that a dotted line connecting respective components such as devices in Fig. 1 indicates a video signal. Furthermore, the devices illustrated in Fig. 1 are part of the device included in the live video production system 1, and the live video production system 1 is not limited to the devices illustrated in Fig. 1, and includes various devices necessary for implementing the functions.

The live video production system 1 includes video cameras 200-1, 200-2, and 200-3 and the like as various devices related to the imaging PL. In a case where the video cameras 200-1, 200-2, 200-3, and the like are described without particular distinction, they are referred to as the video camera 200. For example, the video camera 200 of the imaging PL is a video camera (system camera) arranged in the competition venue. Note that, although three video cameras 200 are illustrated for the imaging PL in Fig. 1, the number of video cameras 200 for the imaging PL is not limited to three, and may be four or more or two or less.

The video camera 200 images a subject. Each video camera 200 communicates with the cloud server 100 via the Internet by wireless communication. Each video camera 200 transmits the imaged individual video signal to the cloud server 100 by wireless communication. The communication method of the wireless communication may be any communication method as long as a band in which a video signal can be transmitted can be secured. For example, the communication method of wireless communication may be a cellular network such as third generation mobile communication standard (3G), fourth generation mobile communication standard (4G), Long Term Evolution (LTE), or fifth generation mobile communication standard (5G), or may be Wi-Fi (registered trademark) (Wireless Fidelity) or the like. Each video camera 200 communicates with a cellular network and further communicates with the cloud server 100 via the Internet in a case where the communication method of wireless communication is a cellular network, and is directly connected to the cloud server via the Internet in a case where the communication method of wireless communication is Wi-Fi. Note that details of the video camera 200 will be described later.

The cloud server 100 is a server device (computer) used to provide a cloud service. The cloud server 100 has a function as an RX 101 which is a reception device. The cloud server 100 transmits and receives information (signals) to and from the video camera 200 located remotely by the function of the RX 101.

The cloud server 100 has at least a part of functions of the CCU. The cloud server 100 has a CCU 102 that implements at least a part of the functions of the CCU. As described above, the cloud server 100 is used to implement the functions of the CCU on the cloud. Hereinafter, the functions of the CCU implemented by the cloud server 100 may be referred to as CCU software.

Furthermore, the cloud server 100 has a function of a switcher that switches video signals. The cloud server 100 has a SWer 103. For example, the cloud server 100 implements a function as a switcher by the SWer 103.

The cloud server 100 switches the video signal to be transmitted to the SWer 21 of the production BS by the SWer 103. For example, the cloud server 100 selects the video signal to be transmitted to the SWer 103 of the production BS among the individual video signals received from the respective video cameras 200 by the SWer 21. The cloud server 100 switches the video signal to be transmitted to the MasterSWer 41 of the distribution DL by a function of a cloud switcher. For example, the cloud server 100 selects the video signal to be transmitted to the MasterSWer 41 of the distribution DL from among the individual video signals received from the respective video cameras 200 by the function of the cloud switcher.

For example, the relationship between the imaging PL and the cloud is a relationship via a base station or a core-net (core-network). Wireless communication is performed by the camera and the base station, and the base station, the core-net, and the Internet are connected by wire, and during this time, priority communication is performed. Wireless communication is performed between the camera and the base station, and wired communication is performed while the base station, the core-net, and the Internet are connected by wire. In the example of Fig. 1, the imaging PL and the cloud server 100 have a relationship via the base station 50 or the core-net as indicated by a two-dot chain line. For example, the video camera 200 and the cloud server 100 communicate with each other via the base station or the core-net. For example, the video camera 200 and the cloud server 100 communicate with each other via the base station 50. For example, the base station 50 may be a base station (5G base station) that provides 5G communication. For example, wireless communication is performed between the video camera 200 and the base station 50, and wired communication is performed while the base station 50, the core-net, and the Internet are connected by wire. For example, the video camera 200 transmits the imaged individual video signal to the cloud server 100 via the base station 50 or the core-net. The cloud server 100 receives a plurality of individual video signals and transmits a remote control signal via the base station 50 or the core-net. For example, the cloud server 100 receives a plurality of individual video signals by the 5G communication. For example, the cloud server 100 transmits the remote control signal by the 5G communication. Note that, in the drawings other than Fig. 1, the relationship between the imaging PL and the cloud or the MEC is indicated by a two-dot chain line as in Fig. 1, and the description thereof will be omitted.

The cloud server 100 has a function as a storage device that stores various types of information (data). For example, the cloud server 100 implements a function as a storage device by the Storage 104. The cloud server 100 stores the video imaged by each video camera 200 by the function of the storage device.

The live video production system 1 includes the video camera 500, the SWer 21, the CCU 22, and the like as the various devices related to the production BS. The SWer 21 receives the first main line video signal from the cloud server 100. The SWer 21 is arranged in the broadcast station (production BS) and functions as a reception device that receives the first main line video signal from the cloud server 100.

The live video production system 1 includes the MasterSWer 31 and the like as various devices related to the broadcast BR. The live video production system 1 includes the MasterSWer 41, a distribution server, and the like as various devices related to the distribution DL. The MasterSWer 41 receives the first main line video signal from the cloud server 100.

The terminal device 10 is a computer used for implementing a remote operation by an operator such as VE. The terminal device 10 is used, for example, in the broadcast station or in another base (other than the imaging site) other than the broadcast station. The terminal device 10 transmits and receives information to and from the cloud server 100 via wireless communication. The terminal device 10 has a function of an RC 11 which is a remote controller. The terminal device 10 transmits information on the operation received from the operator by the function of the RC 11 to the cloud server 100. Note that details of the terminal device 10 used by each operator will be described later.

The terminal device 10 has a function of a monitor 12 which is a display device. The terminal device 10 displays a video received from the cloud server 100 by the function of the monitor 12. Note that details of the terminal device 10 will be described later. Furthermore, in the example of Fig. 1, a case where the function of the RC 11 and the function of the monitor 12 are implemented by the terminal device 10 is illustrated, but the device that implements the function of the RC 11 and the device that implements the function of the monitor 12 may be separate bodies. For example, the function of the RC 11 may be implemented by a notebook PC, a desktop PC, a smartphone, a tablet terminal, a mobile phone, a PDA, or the like of the operator, and the function of the monitor 12 may be implemented by a large display separate from the device of the RC 11.

### [1-1-3. Comparison and effects and the like]

As described above, in the live video production system 1, by using the cloud server 100, it is possible to flexibly arrange physical positions of staffs involved in live video production, and thus it is possible to improve the efficiency of live video production.

In the live video production system 5 of Fig. 16, the OBVAN 600 on which operators such as VE ride is sent to a place (also referred to as "site") where a video is imaged, such as a competition venue, and the live video production is performed. As described above, in the live video production system 5, it is necessary to move the OBVAN 600 to the site, and the time for which the operator such as VE is bound becomes longer. The live video production system 1 can further improve the efficiency of live video production than the live video production system 5 as described below.

In the live video production system 1, the functions of the OBVAN 600 in the live video production system 5 are provided on a cloud, so that the efficiency of live video production can be improved. In the live video production system 1, the cloud (the cloud server 100) has a function related to output control of videos based on a plurality of videos (a cloud switcher or the like) and a function related to remote control.

With the configuration as described above, in the live video production system 1, each video signal of the video camera is input to the cloud server 100 instead of the OBVAN, and each operator can operate at a remote place different from the site (competition venue). In the live video production system 1, since resources can be aggregated at a predetermined base without going to the site, the resources at the site are reduced. There is also a problem that it is desired to efficiently operate with a limited director, and by integrating VE and the like at one place, the director only needs to be at the base, and there is no need to cause the director to go to the site. In addition, in the live video production system 1, it is possible to reduce connection between the video camera and the CCU on site, wiring, and preliminary preparation for a test after wiring, and the like, and thus it is also possible to improve efficiency of workflow. Furthermore, in the live video production system 1, by aggregating production staffs, a plurality of pieces of content can be produced by the same staff per day.

As described above, the live video production system 1 can perform live video production without using the OBVAN by using the cloud server 100. Therefore, the live video production system 1 allows flexible arrangement of the physical positions of staffs involved in the production of the live video, and can improve the efficiency of live video production.

### [1-2. Configuration of live video production system according to first embodiment]

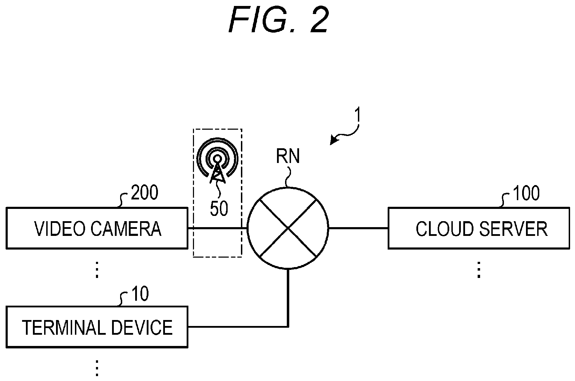

The live video production system 1 illustrated in Fig. 2 will be described. As illustrated in Fig. 2, the live video production system 1 includes the cloud server 100, the video camera 200, and the terminal device 10. The cloud server 100, the video camera 200, and the terminal device 10 are communicably connected in a wireless or wired manner via a predetermined communication network (network RN). In Fig. 2, the video camera 200 communicates via the base station 50, and further communicates with the cloud server 100 via the network RN which is the Internet. For example, wireless communication is performed between the video camera 200 and the base station 50, and wired communication is performed while the base station 50, the core-net, and the network RN which is the Internet are connected by wire. Note that in a case where the communication method is Wi-Fi, the video camera 200 directly communicates with the cloud server 100 via the network RN which is the Internet. Furthermore, the example of Fig. 2 illustrates a case where the core-net is not included in the network RN. Note that the network RN may include the core-net. Fig. 2 is a diagram illustrating a configuration example of the live video production system according to the first embodiment.

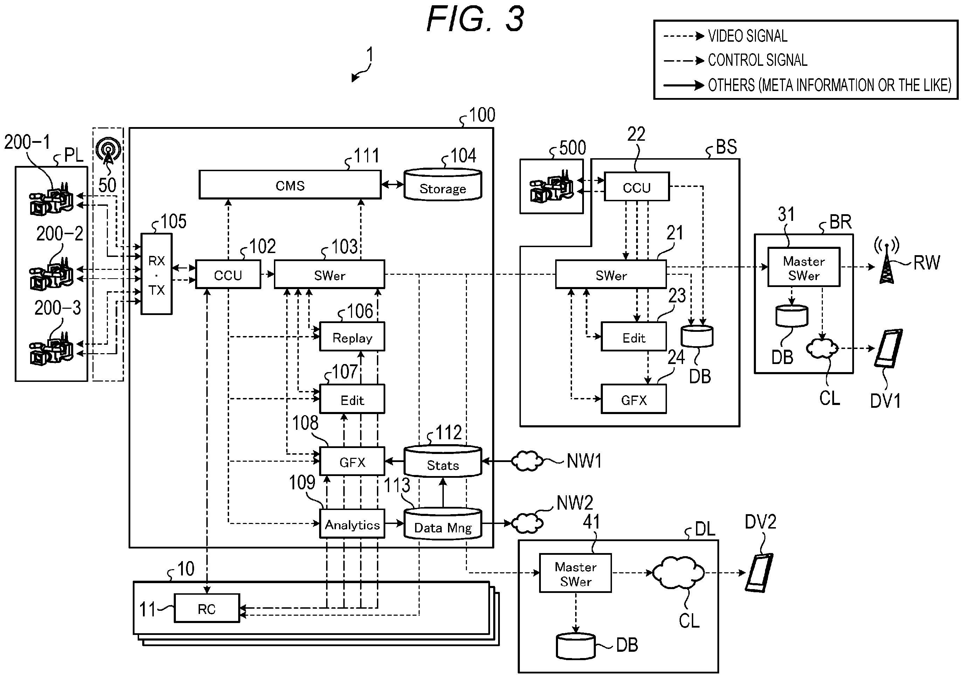

Note that the live video production system 1 illustrated in Fig. 2 may include a plurality of cloud servers 100, a plurality of video cameras 200, and a plurality of terminal devices 10. For example, the example of Fig. 1 illustrates a case where the live video production system 1 includes three video cameras 200. For example, the live video production system 1 may include a plurality of terminal devices 10 respectively corresponding to a plurality of operators. Note that, although only the cloud server 100, the video camera 200, and the terminal device 10 are illustrated in Fig. 2, the live video production system 1 is not limited to the cloud server 100, the video camera 200, and the terminal device 10, and may include various devices as illustrated in Figs. 1 and 3.

The cloud server 100 is an information processing device used to implement cloud computing in the live video production system 1. The cloud server 100 is a device provided at a point (base) different from the imaging place (site) where the video camera 200 is located. The cloud server 100 performs signal processing related to the video imaged by the video camera 200. The cloud server 100 is connected to the video camera 200 via wireless communication.

The cloud server 100 receives the individual video signals obtained by imaging by the plurality of video cameras 200 via wireless communication, and transmits the main line video signal (first main line video signal) based on the individual video signals. The cloud server 100 obtains the main line video signal by output control of a video based on a plurality of received individual video signals according to a first operation signal that is an operation signal related to editing of a video received from an outside. The cloud server 100 transmits a remote control signal for at least one of the plurality of video cameras 200 via wireless communication according to a second operation signal that is an operation signal related to control of the video camera 200 received from the outside.

The cloud server 100 executes a process corresponding to the operation signal received from the terminal device 10. The cloud server 100 performs a process of enabling communication by voice for communication between a camera operator operating the video camera 200 selected by the operator (VE) and the operator. The cloud server 100 uses information in which each of the plurality of video cameras 200 and a camera operator operating each of the plurality of video cameras 200 are associated with each other to specify a camera operator operating the video camera 200 selected by the operator, and performs a process of enabling communication by voice between the camera operator and the operator via an intercom or the like.

The cloud server 100 performs output control including at least one of output switching, video synthesis, still image generation, moving image generation, or replay video generation. The cloud server 100 performs processing including at least one of a switcher (Switcher), an edit (Edit), graphics (GFX), or a replay (Replay).

The cloud server 100 transmits the remote control signal for remotely controlling the video camera 200 to at least one of the plurality of video cameras 200. The cloud server 100 transmits the remote control signal for adjusting at least one of panning, tilting, or zooming. The cloud server 100 transmits the remote control signal for remotely controlling the position of the video camera 200 to the position changing mechanism of the video camera 200. The cloud server 100 has a video analysis function, and extracts or generates information such as Stats information by using an analysis result. Furthermore, the cloud server 100 has a function of aggregating the individual video signals, the main line video signal, the edited video signal, STATS, meta information used for CMS, and the like in a database (DB) .

The cloud server 100 implements functions of a camera control unit. Furthermore, the cloud server 100 is a signal processing device that performs signal processing related to the video imaged by the video camera. For example, the cloud server 100 communicates with the video camera and supplies a reference signal to the video camera. The reference signal is generated in the cloud server 100 and used for synchronization as described later. Furthermore, for example, the cloud server 100 receives a signal from the video camera, performs processing on the received signal, and outputs a signal in a predetermined format. For example, the cloud server 100 has a function of controlling a diaphragm of a video camera, a white level and a black level of a video signal, a color tone, and the like. For example, the cloud server 100 transmits, to the video camera, a control signal for controlling a diaphragm of the video camera, a white level and a black level of the video signal, a color tone, and the like.

For example, the cloud server 100 or the device of the production BS is provided with software for a connection control/management function (Connection Control Manager software) that controls and manages connection between the video camera 200 and the cloud server 100 and live transmission (live streams) of the video acquired by the video camera 200. The software includes a program related to user interface (UI) display control for displaying thumbnails corresponding to videos transmitted from the plurality of video cameras 200 connected to the cloud server 100 and monitoring an output state from each receiver. Furthermore, a program for displaying a UI for controlling connection of the video camera 200, a transmission bit rate, and a delay amount is included. Moreover, a quality of service (QoS) for securing communication quality with a device such as the video camera 200 is mounted on the cloud server 100 or the device of the production BS. For example, a video or the like is transmitted using MPEG-2 TS including forward error correction (FEC) for QoS, MPEG media transport (MMT), or the like. Furthermore, for example, in QoS, adjustment of a transmission band or adjustment of a buffer size is performed according to a situation or characteristics of the transmission path.

The video camera 200 has a function of wireless communication, and is connected to the cloud server 100 via wireless communication. An imaging operation of the video camera 200 is controlled according to the remote control signal. The video camera 200 wirelessly transmits the imaged individual video signal. The video camera 200 transmits the imaged individual video signal to the cloud server 100.

The video camera 200 includes, for example, a complementary metal oxide semiconductor (CMOS) image sensor (also simply referred to as "CMOS") as an image sensor (imaging element). Note that the video camera 200 is not limited to the CMOS, and may include various image sensors such as a charge coupled device (CCD) image sensor.

The video camera 200 has a control unit implemented by an integrated circuit such as a central processing unit (CPU), a micro processing unit (MPU), an application specific integrated circuit (ASIC), or a field programmable gate array (FPGA). For example, the control unit of the video camera 200 is implemented by executing a program stored inside the video camera 200 using a random access memory (RAM) or the like as a work area. Note that the control unit of the video camera 200 is not limited to the CPU, the MPU, the ASIC, or the FPGA, and may be implemented by various means.

The video camera 200 includes, for example, a communication unit implemented by a network interface card (NIC), a communication circuit, or the like, is connected to a network RN (the Internet or the like) in a wired or wireless manner, and transmits and receives information to and from other devices such as the cloud server 100 via the network RN. In the example of Fig. 2, the video camera 200 transmits and receives the video signal, the remote control signal, and the like to and from the cloud server 100 wirelessly. Note that the video camera 200 may have a communication function by a wireless transmission box that is detachably attached. In this case, the wireless transmission box is detachably attached to the video camera 200, and an imaged individual video signal is transmitted to the nearest communication base station or access point by using a predetermined communication method through the wireless transmission box, and is received by a receiver (Rx) installed in the broadcast station via the Internet. Note that the function of the wireless transmission box may be built in the video camera 200. In a case of the detachable configuration, it is possible to easily perform maintenance at the time of failure or the like and upgrade software. On the other hand, in a case where the function of the wireless transmission box is built in the video camera 200, it is possible to reduce the size and cost of the entire device.

Furthermore, the video camera 200 may be provided with a position changing mechanism. For example, the position changing mechanism may have, for example, a tire, a motor (drive unit) that drives the tire, and the like, and may be configured to cause the video camera 200 to function as a vehicle. For example, the position changing mechanism may have, for example, a propeller (propulsor), a motor (drive unit) that drives the propeller, and the like, and may be configured to cause the video camera 200 to function as an unmanned aerial vehicle (UAV) such as a drone. The position changing mechanism of the video camera 200 receives the remote control signal for remotely controlling the position of the video camera 200 from the cloud server 100. The position changing mechanism of the video camera 200 moves on the basis of the received remote control signal.

The terminal device 10 is a computer (information processing device) used for remote operation. The terminal device 10 may be different for each operator or may be the same. For example, the terminal device 10 may be a device such as a notebook PC, a desktop PC, a smartphone, a tablet terminal, a mobile phone, or a PDA. The terminal device 10 is used by the operator and transmits the operation signal corresponding to an operation of the operator to the cloud server 100. The terminal device 10 transmits information indicating the video camera 200 selected by the operator among the plurality of video cameras 200 to the cloud server 100.

The terminal device 10 is a device used by the operator such as VE. The terminal device 10 receives an input from the operator. The terminal device 10 receives an input by an operation of the operator. The terminal device 10 displays information to notify the operator of the information. The terminal device 10 displays information according to an input of the operator. The terminal device 10 receives information from an external device such as the cloud server 100. The terminal device 10 may be any device as long as the processing such as reception, transmission, and display described above can be performed.

The terminal device 10 has a control unit corresponding to the RC 11 in Fig. 1. The terminal device 10 controls various types of processing by a control unit. The control unit of the terminal device 10 is implemented by an integrated circuit such as a CPU, an MPU, an ASIC, or an FPGA. For example, the control unit of the terminal device 10 is implemented by executing a program stored in the terminal device 10 using a RAM or the like as a work area. Note that the control unit of the terminal device 10 is not limited to the CPU, the MPU, the ASIC, or the FPGA, and may be implemented by various means.

The terminal device 10 includes, for example, a communication unit implemented by an NIC, a communication circuit, or the like, is connected to the network RN (the Internet or the like) in a wired or wireless manner, and transmits and receives information to and from another device or the like such as the cloud server 100 via the network RN. In the example of Fig. 2, the terminal device 10 transmits and receives the operation signal and the like to and from the cloud server 100 via the network RN in a wireless or wired manner.

The terminal device 10 has a display unit corresponding to the monitor 12 in Fig. 1. The terminal device 10 displays various types of information on the display unit. The display unit of the terminal device 10 is implemented by, for example, a liquid crystal display, an organic electro-luminescence (EL) display, or the like. The terminal device 10 has an input unit that receives an operation of the operator or the like such as VE. The input unit of the terminal device 10 may be implemented by a button provided in the terminal device 10, a keyboard, a mouse, or a touch panel connected to the terminal device 10.

### [1-2-1. Example of live video production system according to first embodiment]

The live video production system 1 is not limited to the terminal device 10, the cloud server 100, and the video camera 200, and may include various components. The live video production system 1 may include a device provided in a studio, a sub-studio, or the like, a device provided in a facility related to broadcast such as the master control room, a device provided in a facility related to distribution such as OTT, or the like.

In this regard, a configuration of the cloud server 100 according to the first embodiment will be described. Fig. 3 is a diagram illustrating an example of functional blocks (implemented by software) corresponding to the live video production system according to the first embodiment of the present disclosure. Note that description of points similar to those in Figs. 1 and 2 will be omitted as appropriate.

First, each device illustrated in the live video production system 1 will be briefly described in more detail from Fig. 1. Note that a dotted line connecting respective components such as devices in Fig. 3 indicates a video signal. In addition, a one-dot chain line connecting respective components such as devices in Fig. 3 indicates a control signal. Furthermore, a solid line connecting respective components such as devices in Fig. 3 indicates information other than the video signal and the control signal, for example, other information such as meta information. The direction of an arrow illustrated in Fig. 3 illustrates an example of the flow of information, and the flow of the video signal, the control signal, the meta information, or the like is not limited to the direction of the arrow. For example, the video signal, the control signal, the meta information, or the like may be transmitted from a component at an arrow head to a component at an arrow body, or information may be transmitted and received between components without an arrow. For example, in Fig. 3, transmission and reception of the main line video signal and the like are performed between a cloud switcher (SWer 103 and the like) of the cloud server 100 and the SWer 21 of the production BS connected by a dotted line without an arrow. Furthermore, the devices illustrated in Fig. 3 are part of devices included in the live video production system 1, and the live video production system 1 is not limited to the devices illustrated in Fig. 3 and includes various devices necessary for implementing the functions.

### [1-2-1-1. Configuration of cloud server according to first embodiment]

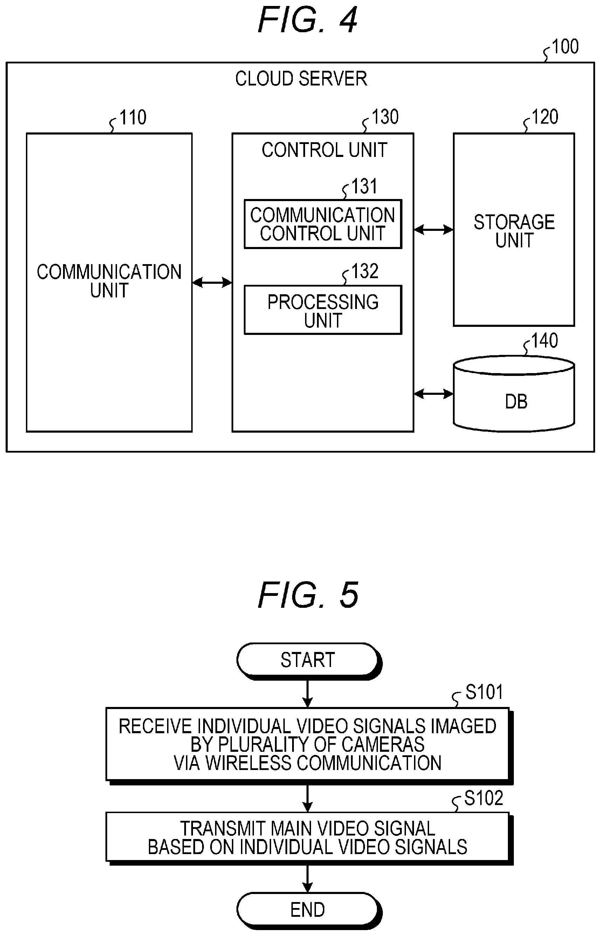

First, prior to the description of Fig. 3, the configuration of the cloud server 100 will be described with reference to Fig. 4. Fig. 4 is a diagram illustrating a configuration example of the cloud server according to the first embodiment of the present disclosure.

As illustrated in Fig. 4, the cloud server 100 has a communication unit 110, a storage unit 120, a control unit 130, and a DB 140. Note that the cloud server 100 may have an input unit (for example, a keyboard, a mouse, or the like) that receives various operations from an administrator or the like of the cloud server 100, and a display unit (for example, a liquid crystal display or the like) that displays various types of information.

The communication unit 110 is implemented by, for example, an NIC or the like. Then, the communication unit 110 is connected to a network RN (see Fig. 2), and transmits and receives information to and from each device of the live video production system 1. The communication unit 110 transmits and receives signals to and from the video camera 200 located remotely via wireless communication. The communication unit 110 receives the individual video signal (imaging signal) from the video camera 200. The communication unit 110 transmits a control signal to the video camera 200.

The storage unit 120 is implemented by, for example, a semiconductor memory element such as a RAM or a flash memory, or a storage device such as a hard disk or an optical disk. The storage unit 120 has a function of storing various information. The individual video signal, the main line video signal, the edited video signal, the STATS, the meta information used for the CMS, and the like may be aggregated in the storage unit 120. Furthermore, these pieces of information can be used for data archiving, news video production, and the like.

The storage unit 120 stores information in which each of the plurality of video cameras 200 is associated with a camera operator operating each of the plurality of video cameras 200. The storage unit 120 stores information used for output switching, video synthesis, still image generation, moving image generation, and replay video generation. The storage unit 120 stores information used for implementing functions as the switcher (Switcher), the edit (Edit), the graphics (GFX), the replay (Replay), or CMS. Furthermore, the storage unit 120 stores information used for implementing the functions as a CCU.

The control unit 130 is implemented by, for example, a CPU, an MPU, or the like executing a program (for example, an information processing program or the like according to the present disclosure) stored inside the cloud server 100 using a RAM or the like as a work area. Furthermore, the control unit 130 is a controller, and is implemented by, for example, an integrated circuit such as an ASIC or an FPGA.

As illustrated in Fig. 4, the control unit 130 has a communication control unit 131 and a processing unit 132, and implements or executes functions and actions of information processing described below. Note that the internal configuration of the control unit 130 is not limited to the configuration illustrated in Fig. 4, and may be another configuration as long as information processing as described later is performed. Furthermore, the connection relationship of each processing unit included in the control unit 130 is not limited to the connection relationship illustrated in Fig. 4, and may be another connection relationship.

The communication control unit 131 controls communication by the communication unit 110. The communication unit 110 performs communication under control of the communication control unit 131.

The processing unit 132 performs signal processing related to video signals. The processing unit 132 analyzes the video imaged by the video camera 200. The processing unit 132 extracts various types of information such as Stats information. The processing unit 132 generates various types of information such as Stats information. The processing unit 132 executes a process of switching an output. The processing unit 132 executes a process of synthesizing a video. The processing unit 132 executes a process of generating a still image. The processing unit 132 executes a process of generating a moving image. The processing unit 132 executes a process of generating a replay video.

The processing unit 132 executes the function of the SWer 103. The processing unit 132 executes functions of an Edit 107. The processing unit 132 executes functions of a GFX 108. The processing unit 132 executes functions of a Replay 106.

The DB 140 includes stats 112 and an event-related information DB. The DB 140 is a database that stores stats information and event-related information. Note that the DB 140 may be included in the storage unit 120.

Hereinafter, description will be made with reference to Fig. 3. The cloud server 100 has an RX/TX 105 which is the communication unit 110. The RX/TX 105 is a configuration describing the RX 101 of Fig. 1 in more detail.

The CCU 102 of the cloud server 100 provides functions of converting a video signal, and operating and managing setting information of a system camera.

The SWer 103 of the cloud server 100 switches a video signal (individual video signal) input to the cloud server 100 and a video signal (processed video signal) generated in the cloud server 100, and outputs the signals to the outside of the cloud server 100. For example, the SWer 103 of the cloud server 100 may superimpose graphics such as a telop and a logo at the time of this switching. Furthermore, the SWer 103 of the cloud server 100 has a function of giving a special effect (wipes, graphics, fade in/out) to the video at the time of switching.

Furthermore, the cloud server 100 has the Replay 106 used to produce a replay video. For example, the cloud server 100 generates a video such as highlight by the Replay 106.

For example, the Replay 106 generates a replay video on the basis of video signals (individual video signals) input to and stored in the cloud server 100 on the basis of operation information input to the cloud server 100 from the outside (user). Note that details of the functions of the Replay 106 and the operator in charge of the Replay 106 will be described later.

Furthermore, the cloud server 100 has the Edit 107 used to edit a moving image or the like. For example, the cloud server 100 inserts a moving image such as an interview or introduction of a player into a video or superimposes the moving image on the video by the Edit 107.

For example, the Edit 107 performs editing of the video signal input to the cloud server 100 based on operation information input to the cloud server from the outside (terminal device 10), and generates an edited processed video signal (edited video signal). Note that details of the function of the Edit 107 and the operator in charge of the Edit 107 will be described later.

Furthermore, the cloud server 100 has the GFX 108 used for graphics using a still image, a moving image, or the like. For example, the cloud server 100 causes the GFX 108 to superimpose a scoreboard, a telop, a photograph of a player, or the like on the video. The GFX of the cloud server 100 performs superimposition by using information such as Stats information held by the Stats 112 of the cloud server 100.

For example, the GFX 108 performs editing of the video signal (individual video signal) input to the cloud server 100 based on operation information from the outside (terminal device 10) input to the cloud server 100, and generates a video signal (processed video signal) to which graphics are added. For example, the GFX 108 superimposes graphics in cooperation with the SWer 103 (video switcher on the cloud). Note that details of the functions of the GFX 108 and the operator in charge of the GFX 108 will be described later.

Furthermore, the cloud server 100 has Analytics 109 used to analyze a video and extract or generate information such as Stats information using an analysis result. For example, the cloud server 100 may analyze a sensor (for example, GPS or the like attached to a player) or a video of the stadium by the Analytics 109, and perform a process of visualization (for example, movement of a player or the like). The cloud server 100 may recognize the face of a player by the Analytics 109 and perform a process of displaying information of a specified player on the basis of the recognition result. The cloud server 100 may automatically generate the replay video by the Analytics 109. Furthermore, the cloud server 100 may perform analysis processing using a technology related to machine learning or artificial intelligence (AI) by the Analytics 109. The cloud server 100 may perform automation related to an operation performed by a human by the technology related to machine learning or artificial intelligence (AI) using history information operated by an operator by the Analytics 109. For example, as an example of a method of implementing the function of the Analytics 109, the cloud server 100 may perform automation regarding an operation performed by a human by the technology related to machine learning or artificial intelligence (AI) using history information operated by a highly skilled operator (expert).

The cloud server 100 has a CMS 111. The CMS 111 of the cloud server 100 functions as a content management system (Contents Management System). The CMS 111 of the cloud server 100 is a control unit that cooperates with the Storage 104 and manages content data. The CMS 111 provides functions of receiving video, audio, and various metadata related to coverage, processing, transmission, and distribution from various systems and functions, holding the video, audio, and various metadata in a storage, and efficiently perform searching, browsing, and editing thereof.

The Stats 112 of the cloud server 100 corresponds to the Storage 104 of the cloud server 100 in Fig. 1. The Stats 112 of the cloud server 100 receives game information and the like from sensors in the stadium or from an external server and stores the game information and the like. In the example of Fig. 3, the Stats 112 of the cloud server 100 receives the game information and the like from an external server NW1. For example, the Stats 112 of the cloud server 100 may receive the game information and the like from the external server NW1 managed by the organization that hosts the game. The Stats 112 may include analysis results of the Analytics 109.

A Data Mng 113 of the cloud server 100 corresponds to the Storage 104 of the cloud server 100 in Fig. 1. The Data Mng 113 of the cloud server 100 mainly provides functions of storing and managing data generated by analyzing a video and data such as weather received from an external system. In the example of Fig. 3, the Data Mng 113 of the cloud server 100 receives information such as an analysis result from the Analytics 109 or an external server NW2 of the cloud server 100. For example, the Data Mng 113 of the cloud server 100 receives information such as an analysis result by the Analytics 109. For example, the Data Mng 113 of the cloud server 100 provides information such as the received analysis result to the Stats 112 of the cloud server 100.

An Edit 23 of the production BS provides functions similar to those of the Edit 107 of the cloud server 100. The Edit 23 of the production BS is a device that provides functions related to editing similar to those of the Edit 107 of the cloud server 100. Furthermore, a GFX 24 of the production BS provides functions similar to those of the GFX 108 of the cloud server 100. The GFX 24 of the production BS is a device that provides functions related to editing similar to those of the GFX 108 of the cloud server 100. The database DB of the production BS stores various types of information (including a past video as an archive) used in the production BS. The database DB of the production BS may have information similar to the Storage 104, the Stats 112, the Data Mng 113, and the like of the cloud server 100.

The database DB of the broadcast BR stores various types of information used in the broadcast BR. The database DB of the broadcast BR may have information similar to the Storage 104, the Stats 112, the Data Mng 113, and the like of the cloud server 100. The database DB of the distribution DL stores various types of information used in the broadcast BR. The database DB of the distribution DL may have information similar to those of the Storage 104, the Stats 112, the Data Mng 113, and the like of the cloud server 100.

A plurality of terminal devices 10 is used according to the operation of each operator and the operation of each function. For example, the terminal device 10 is prepared for each operator. In Fig. 3, one terminal device 10 is illustrated to control a plurality of functions, but each terminal device 10 controls a corresponding function.

### [1-2-2. Operation of each operator and operation of each function]

An operation by each operator using the terminal device 10 and an operation by each function will now be described. First, an operator of a video production system will be described. Note that one operator may also serve as a plurality of roles. In this case, terminal devices for respective operators may be unified.

### [1-2-2-1. Replay]

Operations of an operator and operations of functions related to the Replay will be described. Hereinafter, the operator related to the Replay may be referred to as "RO".

For example, the terminal device 10 for RO includes monitors (which may be integrated into one monitor) that display respective video camera videos and an operation unit (for example, an operation panel) for editing a Replay video. The operation panel includes functions for generating or reproducing a Replay video, for example, a function for switching a camera video, a function for cutting the camera video on a time axis (in-point/outpoint), a function for cropping and enlarging/reducing the camera video, a function for rewinding or fast-forwarding the camera video, a function for making the camera video to be reproduced in slow motion, and the like. Furthermore, the terminal device 10 for RO includes an operation unit corresponding to each function. The RO performs an operation on an operation unit corresponding to these functions and produces a Replay video such as when a predetermined event (for example, a scoring scene or the like) occurs.

The camera video received from each video camera 200 is stored in the cloud server 100 (storage function) as needed. The terminal device 10 receives respective camera videos in real time via the cloud server 100 (storage function), displays the camera videos side by side on the monitor, and displays a video for editing. The RO performs an operation on the operation unit corresponding to each of the above-described functions on the operation panel while checking the videos displayed on the monitor, and produces a Replay video using, for example, a desktop as a service (DaaS) function on the cloud server 100. At this time, the terminal device 10 transmits the operation signal corresponding to the operation by the operation unit to the cloud (the cloud server 100 or the like), and various types of processing are performed on the video in the cloud server 100 according to the operation signal.

The cloud server 100 may downconvert each video and then perform streaming distribution, or may distribute a downconverted video (HD or the like) and a non-downconverted video (4K or the like) in parallel. In this case, the non-downconverted video may be output for a master monitor, for example, in a case where the terminal device 10 includes the master monitor separately from the monitor for each operator.

### [1-2-2-2. GFX]

Operations of an operator and operations of functions related to the GFX will be described. Hereinafter, the operator related to the GFX may be referred to as "GFXO". Note that the cloud server 100 (Stats function) stores the Stats information to be added to video as graphics such as player information. The Stats information may be registered in advance or may be acquired via a network.

For example, the terminal device 10 for GFXO includes a monitor that displays a main line video and an operation panel for editing a GFX video. The operation panel includes a function for switching a camera video, a function for specifying an area where graphics are superimposed on the camera video, a function for reading the Stats information, a function for superimposing predetermined information (for example, the read Stats information) on the designated area, and the like. Furthermore, the terminal device 10 for RO includes an operation unit (including a touch UI) corresponding to each function. The GFXO operates an operation unit corresponding to these functions, and produces the GFX video when a predetermined event (player entry scene, scoring scene, and the like) occurs. Note that the entire processing can be partially automated instead of being performed by the operation of GFXO. For example, a scoring scene or the like may be detected on the basis of image recognition, and a score may be automatically superimposed according to the detection result.

For example, the terminal device 10 for GFXO receives the main line video output from the cloud server 100 (SWer function) in real time by wireless communication or wired communication, and displays the main line video on the monitor. While checking the video displayed on the monitor, the GFXO performs an operation on the operation unit corresponding to each function described above on the operation panel, and produces the GFX video using the DaaS function on the cloud server. At this time, the terminal device 10 transmits the operation signal corresponding to the operation by the operation unit to the cloud (the cloud server 100 or the like), and various types of processing are performed on the video in the cloud server 100 according to the operation signal.

The non-downconverted video may be distributed and output for the master monitor, for example, in a case where the terminal device 10 for GFXO includes the master monitor separately from the monitor for the operator.

### [1-2-2-3. Edit]

Operations of an operator and operations of functions related to the Edit will be described. Hereinafter, the (Edit Operator) operator may be referred to as "EditO". Note that description of points similar to the GFX described above will be omitted.

For example, the terminal device 10 for EditO includes a monitor that displays the main line video and an operation panel for editing the GFX video. For example, the EditO mainly performs operations related to editing of a moving image. For example, the EditO performs an operation related to editing of an interview video, a player introduction video, and the like.

While confirming the video displayed on the monitor, the EditO performs an operation on an operation unit corresponding to the above-described moving image editing function on the operation panel, and produces the video on the cloud server using the DaaS function. At this time, the terminal device 10 transmits the operation signal corresponding to the operation by the operation unit to the cloud (the cloud server 100 or the like), and various types of processing are performed on the video in the cloud server 100 according to the operation signal. The non-downconverted video may be distributed and output for the master monitor, for example, in a case where the terminal device 10 for EditO includes the master monitor separately from the monitor for the operator. Note that moving image editing is basically prepared (stored in DB) offline in advance, but moving image editing may be performed while watching the situation of a game or the like in real time. The EditO may perform editing in real time in the same manner as RO.

### [1-2-2-4. SWer (switcher)]

Operations of an operator and operations of functions related to the SWer will be described. Hereinafter, the operator related to the SWer may be referred to as "SWerO".

The SWer (switcher) has a function of performing a switching process of video signals and a synthesis process such as superimposing. For example, the terminal device 10 for SWerO includes a monitor (which may be integrated into one) that displays respective camera videos, the Replay video, and the GFX video, and an operation panel for generating the main line video by switching various videos. The operation panel has a function for switching various videos (the respective camera videos, the Replay video, and the GFX video), and includes an operation unit corresponding to the function. The SWerO performs an operation on an operation unit corresponding to the function, and produces the main line video by switching the video. Note that the entire processing can be partially automated instead of being performed by the operation of SWerO. For example, the terminal device 10 for SWerO can detect a scoring scene or the like on the basis of image recognition, and perform a process of automatically switching the video according to the detection result. For example, the terminal device 10 for SWerO performs a superimposition (synthesis) process of superimposing a video of a commentator on a video of a game in live broadcast of sports.

For example, the terminal device 10 for SWerO receives the respective camera videos, the Replay video, and the GFX video output from the cloud server 100 (SWer function) in real time by wireless communication or wired communication, and displays the respective camera videos, the Replay video, and the GFX video side by side on the monitor. The SWerO performs an operation (for example, switching) on the operation unit at the video switching timing on the operation panel while confirming the videos displayed on the monitor. The terminal device 10 transmits a switching (trigger) signal to the cloud server 100 (SWer function) according to the operation. The cloud server 100 (SWer function) switches the video (video signal) according to the switching signal, and outputs the main line video (first main line video signal). The non-downconverted video may be distributed and output for the master monitor, for example, in a case where the terminal device 10 for SWerO includes the master monitor separately from the monitor for the operator.

### [1-2-2-5. VE]

An operator of a control system will now be described. Operations of the Video Engineer (VE), who is an operator of a control system, and operations of functions will be described.

For example, the terminal device 10 for VE includes monitors (by the number of cameras) corresponding to respective camera videos and operation panels (by the number of cameras) for remote operation of the respective video cameras. As the VE, one person may be in charge of one video camera, or one person may be in charge of a plurality of (for example, three) video cameras. Note that the remote operation here indicates, for example, a remote operation for controlling the IRIS (diaphragm) of the video camera 200. The VE adjusts the brightness of the camera video by controlling the IRIS of the video camera by remote operation. Note that each of the monitors and the operation panels may be shared by a plurality of video cameras.

Note that the target of the remote operation is not limited to the IRIS (diaphragm), and may be various targets. The target of the remote operation may be various targets related to brightness and color tone. The target of the remote operation may be gain, color balance (tone adjustment and hue/saturation correction), white balance, focus, or the like. For example, in a case where the focus is set as the target of the remote operation, the focus may be finally adjusted by an operator (CO) of a video camera as described later.

For example, the terminal device 10 for VE receives respective camera videos output from the cloud server 100 (SWer function) in real time by wireless communication or wired communication, and displays the respective camera videos on the corresponding monitors. The VE checks the camera videos displayed on the monitors in real time, and performs an operation for adjusting the target of the remote operation such as the IRIS on the operation panel on the basis of an instruction from the director. The operation panel transmits the operation signal corresponding to the operation to the cloud server 100 (CCU function) by wireless communication or wired communication. The cloud server 100 (CCU function) generates a control signal corresponding to the operation signal, and controls the target of the remote operation such as the IRIS of the video camera on the basis of the control signal.

Note that the terminal device 10 for VE may include a monitor for a reference video (video set to reference brightness). In this case, the VE checks the reference video displayed on the monitor for the reference video to perform an operation for adjusting the target of the remote operation such as the IRIS on the operation panel so as to match the brightness of the reference video. The non-downconverted video may be distributed and output for the master monitor, for example, in a case where the terminal device 10 for VE includes the master monitor separately from the monitor for the operator.

### [1-2-2-6. CO]

Next, operations of Camera Operator (CO), who is an operator of a control system, and operations of functions will be described.

For example, the terminal device 10 for CO includes monitors (by the number of video cameras) corresponding to the respective video cameras 200 and operation panels (by the number of video cameras) for remote operation of the respective video cameras 200. As the CO, one person may be in charge of one video camera, or one person may be in charge for a plurality of (for example, three) video cameras. Note that the remote operation here indicates, for example, a remote operation for controlling pan-tilt zoom (PTZ) of the video camera 200. The CO adjusts the angle of view of the camera video by controlling PTZ of the video camera 200 by remote operation.

Note that the target of the remote operation is not limited to PTZ of the video camera 200, and may be various targets. The target of the remote operation may be (adjustment of) the focus. Furthermore, the target of the remote operation is not limited to the video camera 200, and may be various configurations attached to the video camera 200, such as a camera platform tripod in which the video camera 200 is installed. For example, the target of the remote operation may be XYZ control of a mobile body in which the video camera 200 is installed. At this time, the mobile body may be an unmanned aerial vehicle such as a dolly or a drone, or a device that moves along a cable stretched over a field in a facility such as a stadium. Furthermore, the target of the remote operation may be various targets depending on the configuration of the video camera 200.

For example, the terminal device 10 for CO receives respective camera videos output from the cloud server (SWer function) in real time by wireless communication or wired communication, and displays the respective camera videos the on corresponding monitors. The CO checks the camera video displayed on the monitor in real time, and performs an operation for adjusting the target of the remote operation such as PTZ on the operation panel on the basis of an instruction from the director. The operation panel transmits the operation signal corresponding to the operation to the cloud server (CCU function) by wireless communication or wired communication. The cloud server (CCU function) generates a control signal corresponding to the operation signal, and controls the target of the remote operation such as PTZ of the video camera on the basis of the control signal. The non-downconverted video may be distributed and output for the master monitor, for example, in a case where the terminal device 10 for CO includes the master monitor separately from the monitor for the operator.

### [1-2-3. Another functional example in live video production system]

As described above, the live video production system 1 is not limited to the functions illustrated in Figs. 1 to 3, and may include various functions. This point will be described below. Note that the functions described below are examples of functions that can be included in the live video production system 1, and may or may not be included depending on the purpose or use of the live video production system 1.

### [1-2-3-1. Functions of cloud server]

The cloud server 100 may have a function of Automation. The cloud server 100 has the function of Automation as a function of automatic control of various functions (such as a switcher) based on an automatic analysis result. The Automation of the cloud server 100 provides a general automation function.

For example, the Automation provides automatic control based on functions and metadata related to video processing and transmission/distribution. For example, the Automation provides an automatic cut point editing function based on scene switching information generated by AI and automatic sending using sending list data. Various functions such as switcher, edit, graphics, and replay are automatically controlled by the Automation. For example, the cloud server 100 automatically performs switching work of a video signal to be transmitted. For example, the cloud server 100 automatically generates a replay video.

The cloud server 100 may have a function of Mixier. The Mixier of the cloud server 100 performs switching of the presence or absence of output, level control, channel switching, and the like for each input sound channel with respect to an audio signal, and performs audio output.

The cloud server 100 may have a function of Monitoring. The Monitoring of the cloud server 100 provides a monitoring function. The Monitoring provides the monitoring function related to various systems. For example, the Monitoring performs process monitoring on a cloud, network monitoring, monitoring of connection to physical resources, and the like on the basis of logs or alert notifications generated by each system or component. The Monitoring provides a monitoring function using a general communication technology (Simple Network Management Protocol (SNMP), and the like), particularly in the case of a network (Network). By the UI function included in the monitoring function, as a preliminary preparation, each camera is associated with the corresponding operation device or monitor, and a connection relationship is constructed.

The cloud server 100 may have a function of Tally Master. The Tally Master of the cloud server 100 provides a function related to a tally signal. The Tally Master provides a function in which a status notification of devices managed by input on/off by GPI (electrical signal) to the devices is IP converted, and handled in a network cloud system (live video production system 1 or the like).

Note that all the various functions on the cloud described above are not limited to be implemented on the cloud, and part of the functions may be executed outside the cloud according to the purpose or use of the live video production system 1. For example, the various functions on the cloud described above are not limited to a case of implementing by one cloud server 100, and may be implemented by a plurality of cloud servers 100. Furthermore, part of the functions may be implemented by physical CCU hardware.

### [1-2-3-2. Functions in master control room]

A device having a function of the Trafic/Scheduling system may be arranged in the master control room (for example, the main adjustment room of the broadcast BR or the like) of the live video production system 1. The Trafic/Scheduling system is a highest-order system that generates and manages a program configuration for one day and appropriately distributes data thereof to subordinate systems with the content appropriate for the system.

A device having a function of Automatic Program Controller (APC) may be arranged in the master control room (for example, the main adjustment room of the broadcast BR or the like) of the live video production system 1. The APC controls various devices according to a program configuration managed by the Trafic/Scheduling system.

A device having a function of Ingest/QC may be arranged in the master control room (for example, the main adjustment room of the broadcast BR or the like) of the live video production system 1. The Ingest/QC captures the video signal via a router on the basis of the control of APC, and stores the video signal in a storage. Furthermore, program content created by the production is digitized and loaded into a storage. At this time, video output for quality check of the digitized video is performed on the monitor.

A device having a function of Tag/index may be arranged in the master control room (for example, the main adjustment room of the broadcast BR or the like) of the live video production system 1. The Tag/index performs, for example, analysis by AI or the like for a video (also referred to as "video content") stored in a storage, and adds a tag index to the video content. The video content refers to, for example, content stored in a video media format in a storage or the like. Alternatively, the Tag/index outputs video content stored in the storage to a monitor, and adds a tag index on the basis of an input by a user who is checking the video content.

A device having a function of AD-in may be arranged in the master control room (for example, the main adjustment room of the broadcast BR or the like) of the live video production system 1. AD-in outputs a CM (commercial message) stored in the storage to the read switcher on the basis of the control of the APC.

A device having a function of Channel In-A-Box (CIAB) may be arranged in the master control room (for example, the main adjustment room of the broadcast BR or the like) of the live video production system 1. The CIAB reads video content from the storage and outputs the video content to the switcher on the basis of the control of the APC.

### [1-2-3-3. Functions in studio]

In a studio of the live video production system 1 (for example, the studio SD or the sub-studio SS of the production BS or the like), a device having a function of News Room Control System (NRCS) may be arranged. The NRCS is a high-order data system dedicated to news that manages a configuration (transmission list) of each news program. The NRCS has a function of creating a plan of coverage information and distributing the plan in cooperation with the transmission list, and has a function of distributing the information in an appropriate form to subordinate systems.

A device having a function of News Automation (NA) may be arranged in a studio of the live video production system 1 (for example, the studio SD or the sub-studio SS of the production BS or the like). NA controls various devices (such as a switcher) according to the configuration managed by the NRCS.

### [1-2-4. Others]

Hereinafter, points other than the points described above with respect to the live video production system 1 will be described. The image quality of video may be various image qualities (multi-format) such as Standard Dynamic Range (SDR) and High Dynamic Range (HDR). For example, the image quality of the video may be converted between SDR and HDR according to communication, processing, or the like.

### [1-2-4-1. Data communication]

Data communication in the live video production system 1 may be performed in any mode as long as the processing in the live video production system 1 can be implemented. Note that, in a case where the live video production system includes the CCU (CCU hardware) which is a physical device, the signal between each block (component) may be communication of an IP-converted signal except for the signal communication between the video camera 200 and the CCU hardware. For example, in a case where CCUs 300-1 to 300-3, which are physical devices, are included as in a live video production system 1A as described later, signals between respective blocks (components) may be communication of IP-converted signals except for communication of signals between the video camera 200 and the CCUs 300-1 to 300-3.

### [1-2-4-2. Synchronization of signals]

Synchronization in the live video production system 1 may be performed in any manner as long as the processing in the live video production system 1 can be implemented.

For synchronization of video signals, synchronization among the video cameras 200 is performed using a reference signal (master clock). The video signals are synchronized on the basis of a synchronization signal such as a reference signal supplied from the cloud server 100. Since the time between images may be shifted due to a delay in the cloud server 100, in this case, there is a function of performing synchronization in the cloud server 100. The individual camera videos (individual video signals) from the plurality of video cameras 200 input to the SWer 103 are synchronized with each other. In this synchronization, for example, the videos are synchronized by a time stamp or the like included in the frame of each video. By buffering each video in the storage before the video is input to the SWer 103, for example, synchronization is performed based on the slowest video. For example, synchronization of the video signals described above is performed in the SWer 103, but the synchronization may be performed by other than the SWer 103.

Furthermore, regarding synchronization of the operator's operations, an operation (such as SWer/Edit/GFX) on a video performed by each operator via the terminal device 10 (RC 11) and a video on which the operation is performed are synchronized. In this synchronization, for example, the operation signal and the video are synchronized with each other on the basis of a time stamp included in the operation signal generated according to an operation of the operator and a time stamp of the video as the target of the remote control. For example, the above-described synchronization of the operator's operations is performed in each functional block in the cloud (the cloud server 100 or the like).

### [1-2-4-3. VE/CO assistance function (intercom)]

The live video production system 1 may provide a function of assisting the VE and CO using the function of an intercom. The live video production system 1 may have a function for establishing/switching a communication line (between the VE or CO and the camera operator) for audio data of the intercom in a cloud (the cloud server 100 or the like). For example, when the VE or CO performs an operation of selecting the video camera 200 by the terminal device 10 (RC 11) in order to perform a remote operation (IRIS/focus or the like) on the video camera, the above-described function of the cloud (the cloud server 100 or the like) establishes an audio communication line with the camera operator of the selected video camera 200 using the selecting operation as a trigger.

The cloud server 100 may have a function of Voice Over IP (VoIP (Internet Protocol)). The VoIP of the cloud server 100 provides a mechanism for transmitting and receiving audio signals as IP streams. The VoIP is provided to implement bidirectional voice communication required during broadcast work. For example, the VoIP is used for communication between a local person in a game venue or the like, a director in a remote place, an operator, or the like. The VoIP is used for communication between a person in a field such as a coverage site and a person in a studio, and the like. The cloud server 100 may perform authority management of each user (human) who uses the live video production system 1. For example, the cloud server 100 may perform the authority management of each user (human) regarding use of the VoIP. For example, the cloud server 100 may limit a partner with whom voice communication can be performed by the VoIP according to the authority of each user (human).

In order to implement the above function, for example, an ID of equipment (video camera) and an ID of an intercom used in a set with the equipment are managed in association with each other in a storage (CMS) function of the cloud (the cloud server 100 or the like). Then, the cloud server 100 specifies the ID of the video camera by an operation of selecting the video camera by VE, and performs control to connect the communication line between the intercom associated with the video camera corresponding to the ID and the selected intercom of VE. Note that the CMS may further manage the IDs of operators in association.

In addition, the live video production system 1 may display information that assists the operator, such as VE and CO. For example, the terminal device 10 for VE may calculate an index (numerical value) of brightness of each camera video as reference information for VE. Furthermore, the terminal device 10 for VE may display the calculated index (numerical value). The terminal device 10 uses date and time information and weather information recorded in the Data Mng 113 in the calculation of the index of brightness.

### [1-3. Procedure of live video processing according to first embodiment]

Next, processing according to the first embodiment will be described with reference to Fig. 5. Fig. 5 is a flowchart illustrating an example of processing of the live video production system according to the first embodiment.

As illustrated in Fig. 5, the cloud server 100 receives the individual video signals obtained by imaging by the plurality of video cameras 200 via wireless communication (step S101). Then, the cloud server 100 transmits the main line video signal based on the individual video signals (step S102). The cloud server 100 transmits the generated main line video signal to the device (SWer 21) of the production BS.

### [2. Second embodiment]

The system configuration of the live video production system is not limited to the above-described first embodiment, and may be various system configurations. This point will be described below. In the first embodiment described above, the case where the cloud server 100 implements the CCU functions by the CCU software has been described, but the live video production system may include a signal processing device that implements a part of the CCU functions. In this case, the live video production system may include a signal processing device that communicates with at least one of the plurality of video cameras 200 and with the cloud server 100 and performs camera-related processes that are processes related to the video camera 200.

As described above, the live video production system 1A of the second embodiment includes the cloud server 100 that implements CCU functions by the CCU software, and the CCU 300 which is a CCU (CCU hardware) configured using a physical hardware housing and implements the CCU functions. The CCU hardware may perform a second process that is a process (video processing process) such as adjustment of gain, color balance, and white balance, and the CCU software may perform a first process that is a non-video processing process such as a process of adjusting IRIS (diaphragm), focus, and the like (for example, mechanical control processing). In this case, the CCU software may perform control processing such as giving a control command to CCU hardware that performs video processing, in addition to the mechanical control such as diaphragm driving and focus lens driving. Note that sharing of the CCU functions between the cloud server 100 and the CCU 300 is not limited to the above example, and may be any sharing.

Hereinafter, a case where a plurality of CCUs 300 is provided respectively in association with the plurality of video cameras 200 will be described. As described above, in the second embodiment, the live video production system 1A is described in which the CCU 300 which is a physical CCU (CCU hardware) is arranged between the cloud server 100 and the video camera 200. Note that the functions of the CCU hardware may be implemented by a baseband processing unit (BPU). Furthermore, description of points similar to those in the first embodiment will be omitted as appropriate.

### [2-1. Outline of live video production system according to second embodiment of present disclosure]

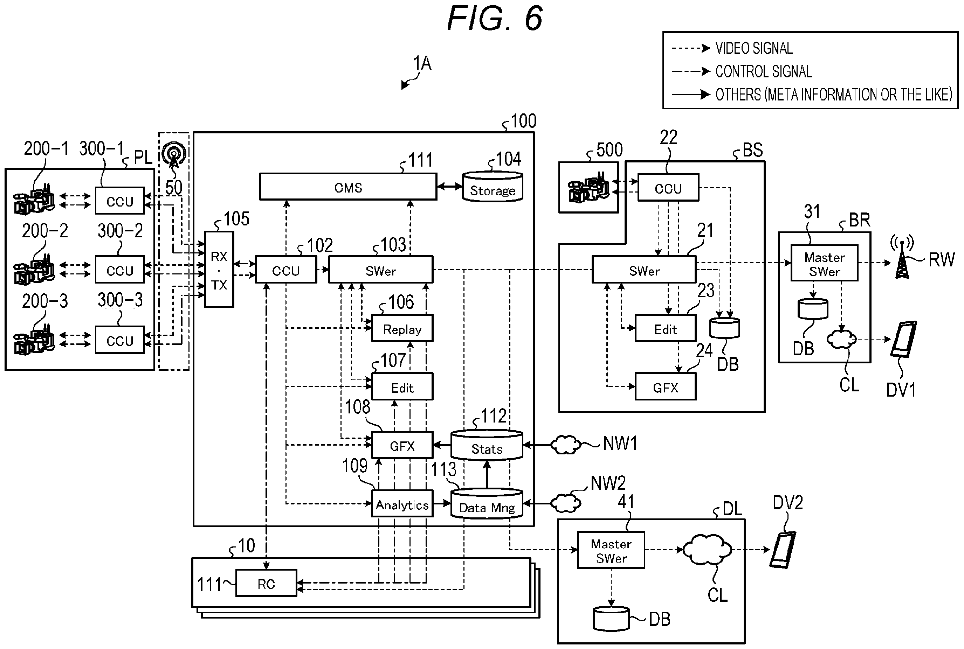

An outline of a live video production system according to the second embodiment will be described with reference to Fig. 6. Fig. 6 is a diagram illustrating an example of a live video production system according to a second embodiment of the present disclosure. A configuration of the live video production system 1A illustrated in Fig. 6 will be described. Note that, in the live video production system 1A, description of points similar to those of the live video production system 1 will be omitted as appropriate.

The live video production system 1A includes various devices related to the imaging PL such as the plurality of video cameras 200 and the plurality of CCUs 300, the cloud server 100, the terminal device 10, various devices related to the production BS, various devices related to the distribution DL, and various devices related to the broadcast BR. Note that a dotted line connecting respective components such as devices in Fig. 6 indicates a video signal. In addition, a one-dot chain line connecting respective components such as devices in Fig. 6 indicates a control signal. Further, a solid line connecting respective components such as devices in Fig. 6 indicates information other than the video signal and the control signal, for example, other information such as meta information. The direction of the arrow illustrated in Fig. 6 illustrates an example of the flow of information, and the flow of the video signal, the control signal, the meta information, and the like is not limited to the direction of the arrow. Furthermore, the devices illustrated in Fig. 6 are part of the device included in the live video production system 1A, and the live video production system 1A is not limited to the devices illustrated in Fig. 6, and includes various devices necessary for implementing the functions.

The cloud server 100 of the live video production system 1A performs camera optical system control (non-video processing process) as a first process among the camera-related processes. The camera optical system control includes control of adjusting at least one of the diaphragm or the focus which is the optical system of the video camera 200. The optical system control is mainly control of a mechanical mechanism such as a diaphragm driving mechanism and a focus lens driving mechanism.

The cloud server 100 transmits and receives information (signal) to and from the remote CCU 300 located remotely via wireless communication by the RX/TX 105. The cloud server 100 transmits and receives the video signal and the control signal to and from the CCU 300 by the RX/TX 105.

The live video production system 1A includes the video cameras 200-1, 200-2, and 200-3, the CCUs 300-1, 300-2, and 300-3, and the like as various devices related to the imaging PL. In a case where the CCUs 300-1, 300-2, 300-3, and the like are described without particular distinction, they are referred to as the CCU 300. Note that, although three CCUs 300 are illustrated, the number of CCUs 300 is not limited to three, and may be two or less. Fig. 6 illustrates a case where one CCU 300 is associated with each of the video cameras 200, but one CCU 300 may be associated with two or more video cameras 200.

The video camera 200 of the live video production system 1A communicates with the CCU 300. Each video camera 200 communicates with the CCU 300 connected by wire. Each video camera 200 transmits and receives a video signal and a control signal to and from the corresponding CCU 300. Note that details of a mode of connection and communication between the video camera 200 and the CCU 300 will be described later.

The CCU 300 is a signal processing device used to perform control related to a video camera. The CCU 300 communicates with at least one of the plurality of video cameras 200 and with the cloud server 100, and the CCU 300 that performs the camera-related processes that are processes related to the video camera 200 performs a video processing process as a second process different from the first process among the camera-related processes. The second process is signal processing on the video signal (video processing process), and includes a process of adjusting at least one of gain, color balance, or white balance. Furthermore, each CCU 300 transmits and receives a video signal and a control signal to and from the corresponding video camera 200.

As described above, the live video production system 1A has the cloud server 100 that implements the CCU functions by the CCU software and the CCU 300 which is a physical CCU (CCU hardware), so that the CCU functions can be appropriately shared among the components. Therefore, the live video production system 1A can improve the efficiency of the live video production using the cloud server.

### [2-2. Configuration of live video production system according to second embodiment]

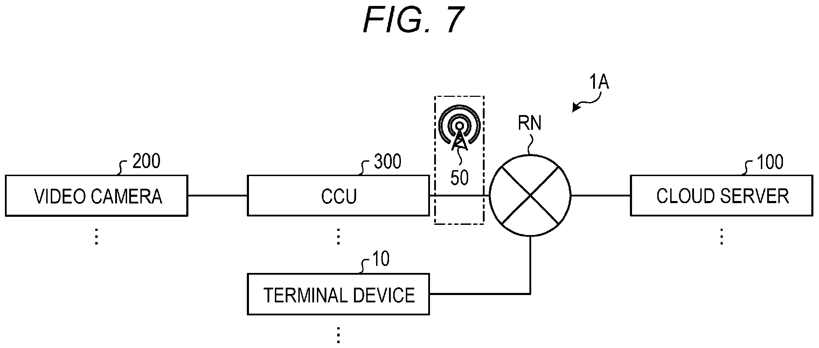

Fig. 7 is a diagram illustrating a configuration example of the live video production system according to the second embodiment of the present disclosure. The live video production system 1A illustrated in Fig. 7 will be described. As illustrated in Fig. 7, the live video production system 1A includes the cloud server 100, the video camera 200, the CCU 300, and the terminal device 10. The cloud server 100, the CCU 300, and the terminal device 10 are communicably connected in a wireless or wired manner via a predetermined communication network (network RN). In Fig. 7, the CCU 300 communicates via the base station 50, and further communicates with the cloud server 100 via the network RN which is the Internet. The video camera 200 is communicably connected to the CCU 300. For example, wireless communication is performed between the CCU 300 and the base station 50, and wired communication is performed while the base station 50, the core-net, and the network RN which is the Internet are connected by wire.

Note that the live video production system 1A illustrated in Fig. 7 may include a plurality of cloud servers 100, a plurality of video cameras 200, a plurality of CCUs 300, and a plurality of terminal devices 10. For example, the example of Fig. 6 illustrates a case where the live video production system 1A includes three video cameras 200 and three CCUs 300. For example, the live video production system 1A may include a plurality of terminal devices 10 respectively corresponding to a plurality of operators. Note that only the cloud server 100, the video camera 200, and the terminal device 10 are illustrated in Fig. 7, but the live video production system 1A is not limited to the cloud server 100, the video camera 200, and the terminal device 10, and may include various devices like those illustrated in Fig. 6.

The cloud server 100 is an information processing device used to implement cloud computing in the live video production system 1A. The cloud server 100 is a device provided at a predetermined point (base) located remotely from the imaging place (site) where the video camera 200 is located. The cloud server 100 has a function of wireless communication, and performs signal processing related to the video imaged by the video camera 200. The cloud server 100 is wirelessly connected to the CCU 300.

The cloud server 100 receives the individual video signals obtained by imaging by the plurality of video cameras 200 from the CCU 300 via wireless communication, and transmits main line video signals based on the individual video signals to any one of the SWer 21, the MasterSWer 31, and the MasterSWer 41. The cloud server 100 obtains the main line video signal by output control of a video based on a plurality of received individual video signals according to a first operation signal that is an operation signal related to editing of a video received from an outside. The cloud server 100 transmits the remote control signal for at least one of the plurality of video cameras 200 to the corresponding CCU 300 via wireless communication according to a second operation signal that is an operation signal related to control of the video camera 200 received from the outside.

The video camera 200 communicates with the CCU 300. The imaging operation of the video camera 200 is controlled via the CCU 300 according to the remote control signal. The imaging operation includes an operation corresponding to the non-video processing process and an operation for PTZ control. The video camera 200 transmits the imaged individual video signal via the CCU 300. The video camera 200 transmits the imaged individual video signal to the cloud server 100 via the CCU 300. Furthermore, the video camera 200 is supplied with power in various modes, which will be described later.

The CCU 300 has a control unit that performs control related to a video camera. The CCU 300 performs various types of control by the control unit. The control unit of the CCU 300 is implemented by an integrated circuit such as a CPU, an MPU, an ASIC, or an FPGA. For example, the control unit of the CCU 300 performs various controls by executing a program stored in the CCU 300 using the RAM or the like as a work area. Note that the control unit of the CCU 300 is not limited to the CPU, the MPU, the ASIC, or the FPGA, and may be implemented by various means.

The CCU 300 includes, for example, a communication unit implemented by an NIC, a communication circuit, or the like, is connected to the network RN (the Internet or the like) in a wired or wireless manner, and transmits and receives information to and from the cloud server 100 via the network RN. In the example of Fig. 7, the CCU 300 transmits and receives the individual video signals, control signals, and the like via wireless communication to and from the cloud server 100 via the network RN. Furthermore, the CCU 300 transmits and receives the individual video signal, control signal, and the like to and from the video camera 200 by wired or wireless connection.

### [2-3. Example of power supply to camera]

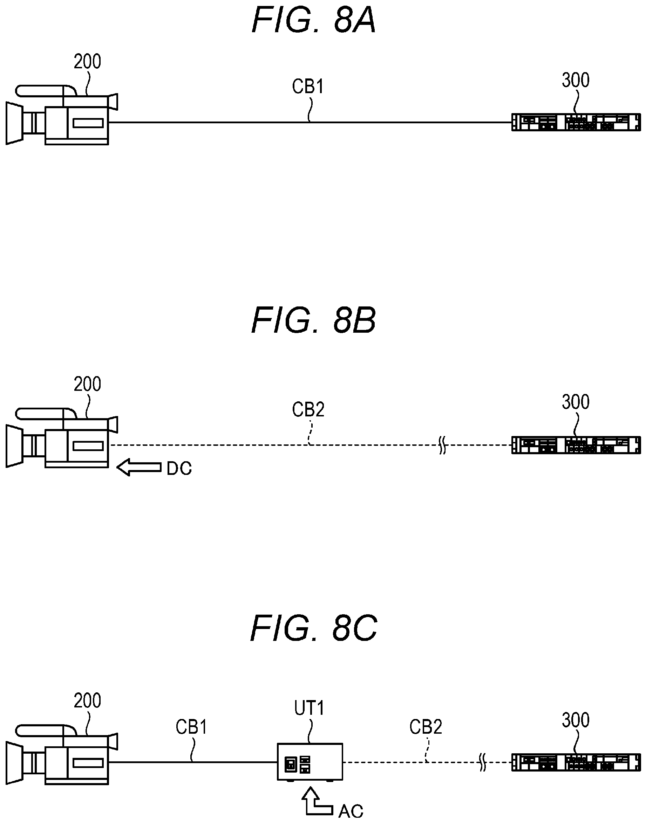

The power supply to the video camera may be in various aspects. This point will be described with reference to Figs. 8A to 8C.

### [2-3-1. First supply example]

First, a first supply example of power supply will be described with reference to Fig. 8A. Fig. 8A is a diagram illustrating an example of power supply to the video camera.

In the example of Fig. 8A, the video camera 200 and the CCU 300 are connected by an optical-electrical composite cable CB1 in which an optical communication cable and an electric communication cable are bundled into one. The optical-electrical composite cable CB1 is a cable capable of supplying power. For example, the optical-electrical composite cable CB1 may have a length of up to several hundred meters (for example, 600 m or the like). In the example of Fig. 8A, for example, AC power supply is supplied from the CCU 300 to the video camera 200 by the optical-electrical composite cable CB1.

Furthermore, the video camera 200 and the CCU 300 communicate with each other via the optical-electrical composite cable CB1, and the individual video signal, control signal, and the like are transmitted and received by an SDI method such as a 12G-serial digital interface (SDI) method.

### [2-3-2. Second supply example]

Next, a second supply example of the power supply will be described with reference to Fig. 8B. Fig. 8B is a diagram illustrating an example of power supply to the video camera.

In the example of Fig. 8B, the video camera 200 and the CCU 300 are connected by a single-mode optical fiber cable CB2. The optical fiber cable CB2 is an optical fiber cable without power supply. For example, the optical fiber cable CB2 may have a length of a maximum of several kilometers (for example, 10 km or the like). In the example of Fig. 8B, power is supplied to the video camera 200 by local power supply. For example, a power supply cable different from the optical fiber cable CB2 is connected to the video camera 200, and power is supplied by the power supply cable. For example, power is supplied to the video camera 200 by a power supply cable having a power plug and the like. For example, a direct current (DC) power is supplied to the video camera 200.

Furthermore, the video camera 200 and the CCU 300 communicate with each other via the optical fiber cable CB2. The individual video signal, control signal, and the like are transmitted and received between the video camera 200 and the CCU 300 by the optical fiber cable CB2.

### [2-3-3. Third supply example]

Next, a third supply example of the power supply will be described with reference to Fig. 8C. Fig. 8C is a diagram illustrating an example of power supply to the video camera. The third supply example illustrates an example in which a power supply unit UT1 is arranged between the video camera 200 and the CCU 300.

In the example of Fig. 8C, the CCU 300 and the power supply unit UT1 are connected by an optical fiber cable CB2. The optical fiber cable CB2 is a single-mode optical fiber cable without power supply. For example, the optical fiber cable CB2 may have a length of a maximum of several kilometers (for example, 10 km or the like).

In addition, the CCU 300 and the power supply unit UT1 communicate with each other via the optical fiber cable CB2 to transmit and receive the individual video signal, control signal, and the like.

Furthermore, in the example of Fig. 8C, the video camera 200 and the power supply unit UT1 are connected by the optical-electrical composite cable CB1. The optical-electrical composite cable CB1 is an optical-electrical composite cable capable of supplying power. For example, the optical-electrical composite cable CB1 may have a length of up to several hundred meters (for example, 350 m or the like). In the example of Fig. 8C, for example, AC power is supplied from the power supply unit UT1 to the video camera 200 by the optical-electrical composite cable CB1.

Furthermore, the video camera 200 and the power supply unit UT1 communicate with each other via the optical-electrical composite cable CB1. The individual video signal, control signal, and the like are transmitted and received between the video camera 200 and the power supply unit UT1 by the optical-electrical composite cable CB1. Thus, the video camera 200 and the CCU 300 communicate with each other via the power supply unit UT1.

Note that the above-described first to third supply examples are merely examples, and power may be supplied to the video camera 200 in various modes. For example, power may be supplied from a battery mounted on the video camera 200.

### [2-4. Processing example in live video production system]

An example of various types of processing in the live video production system will now be described.

### [2-4-1. Processing in live video production system]

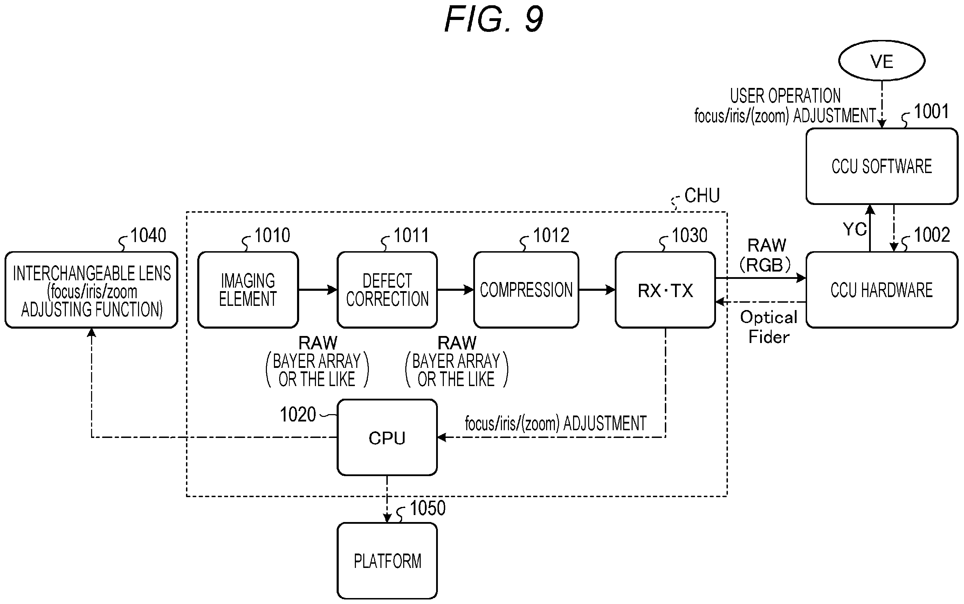

First, an outline of a configuration and processing of each device in the live video production system will be described with reference to Fig. 9. Fig. 9 is a diagram illustrating an example of processing in the live video production system. Note that the following is an example of CCU hardware 1002 configured as a hardware product having a physical housing. Note that the CCU hardware 1002 does not mean that all of the processing is performed by hardware processing, and part of the processing may be performed by software processing.

In the description of Fig. 9, a case where a single-plate type (single-plate type) video camera 200 using one image sensor (for example, CMOS) is used will be described as an example. Note that the video camera 200 is not limited to the single-plate method, and another method such as a three-plate method (three-plate type) using three image sensors (for example, CMOS) may be employed, but this point will be described later.

As illustrated in Fig. 9, the live video production system 1A includes CCU software 1001, CCU hardware 1002, and a camera head unit CHU. The camera head unit CHU is a video camera 200. For example, the functions of the CCU software 1001 are implemented by the cloud server 100. For example, the CCU hardware 1002 is the CCU 300. In this manner, in the example of Fig. 9, the functions of the CCU are divided. In the example of Fig. 9, the functions are divided into functions implemented on the cloud by the cloud server 100 and functions implemented as a hardware configuration by the CCU 300.

First, a flow of information (data) from the camera head unit CHU to the CCU hardware 1002 and the CCU software 1001 will be described while describing a configuration and processing of the camera head unit CHU.

The camera head unit CHU includes components such as an imaging element 1010, a CPU 1020, and an RX/TX 1030.

An interchangeable lens 1040 has a function of adjusting focus, iris (diaphragm), and zoom.

The imaging element 1010 is an image sensor. The CPU 1020 is a processor that controls the operation of the entire video camera, and adjusts, for example, the focus, iris (diaphragm), and zoom of the interchangeable lens 1040. Furthermore, the CPU 1020 adjusts pan and tilt by controlling a Pan/Tilter such as the camera platform 1050.

For example, the camera head unit CHU is attached to the Pan/Tilter. The Pan/Tilter has a function of adjusting pan and tilt. The Pan/Tilter may be separate from the camera head unit CHU, and the camera head unit CHU may be detachable from the Pan/Tilter. For example, the Pan/Tilter may be integrated with the camera head unit CHU. For example, instead of the Pan/Tilter, a dolly or a drone may be used to adjust pan/tilt or the like.

The RX/TX 1030 has a function as a communication unit (a transmission unit and a reception unit). The RX/TX 1030 is an NIC, a communication circuit, or the like.

The imaging element 1010 includes, for example, a CMOS or a CCD, photoelectrically converts an optical image from a subject incident through the interchangeable lens 1040, and outputs video data.

Fig. 9 illustrates a case of the single-plate method, and RAW data as video data output from the imaging element 1010 is video data in which a positional relationship of an array of color filters on the imaging element 1010 is maintained. For example, the array of the color filters is a Bayer array. The RAW data does not include YC as described later. Note that, in the present embodiment, video data of three planes of red (R), green (G), and blue (B) by color separation of video data output from the imaging element 1010 is also referred to as RAW data. Moreover, in a case of the three-plate method, a combination of three video data of R, G, and B output from each imaging element 1010 is also referred to as RAW data.

Further, in either case of the single-plate method and the three-plate method, the RAW data is not subjected to YC conversion, that is, a process of converting RGB data into luminance data Y and color difference data C, which are the YC methods, and is a video not subjected to part or all of processes related to color/brightness adjustment described later. Note that, as the YC method, various methods such as YCbCr, YUV, and YIQ may be used.

A defect correction 1011 is performed on the RAW data output from the imaging element 1010, and then processing of compression 1012 is performed. Note that the processing of the defect correction 1011 and the compression 1012 does not have to be performed.

A TX of the RX/TX 1030 transmits the RAW data to the CCU hardware 1002.

The CCU hardware 1002 that has received the RAW data performs YC conversion. Then, the CCU hardware 1002 transmits data (referred to as "YC" or "YC data") obtained by performing YC conversion on the RAW data to the CCU software 1001. Note that various chroma formats may be employed for YC. For example, 4:4:4, 4:2:2, or 4:2:0 may be employed as a chroma format.

A flow of information (data) from the CCU software 1001 to the CCU hardware 1002 and the camera head unit CHU will now be described.

The CCU software 1001 receives a user operation of VE. In the example of Fig. 9, the CCU software 1001 receives adjustment of focus, iris (diaphragm), and zoom of the camera head unit CHU by VE. The CCU software 1001 transmits operation information (operation signal) by a user operation of VE to the CCU hardware 1002.

The CCU hardware 1002 transmits the operation information received from the CCU software 1001 to the camera head unit CHU by the optical fiber cable or the like described in Fig. 8. The CCU hardware 1002 may determine the operation information received from the CCU software 1001 via an RX of the RX/TX 1030 by the CPU 1020, generate control information (control signal) for adjusting the focus, the iris (diaphragm), and the zoom of the camera head unit CHU, and transmit the generated control information to the camera head unit CHU.

Note that the CCU hardware 1002 may transmit the operation information itself received from the CCU software 1001 to the camera head unit CHU as control information (control signal).

The RX receives information (individual video signal or the like) from the CCU hardware 1002. For example, in a case where the individual video signal is received as the return video, the individual video signal is displayed in a VF (view finder) which is not illustrated. The RX/TX 1030 transmits (transfers) information (signal) for adjusting the focus, iris (diaphragm), and zoom of the interchangeable lens 1040 to the CPU 1020.

Note that, although an RX 1021 and an RX/TX 1023 are configured separately in the diagram, a configuration may be employed in which only the RX/TX 1023 is configured, and the RAW data is received by the RX/TX 1023.

Upon receiving the operation signal for adjusting the focus, iris (diaphragm), and zoom of the interchangeable lens 1040, the CPU 1020 adjusts the focus, iris (diaphragm), and zoom of the camera head unit CHU on the basis of the received operation signal.

### [2-4-2. Processing in CCU hardware]

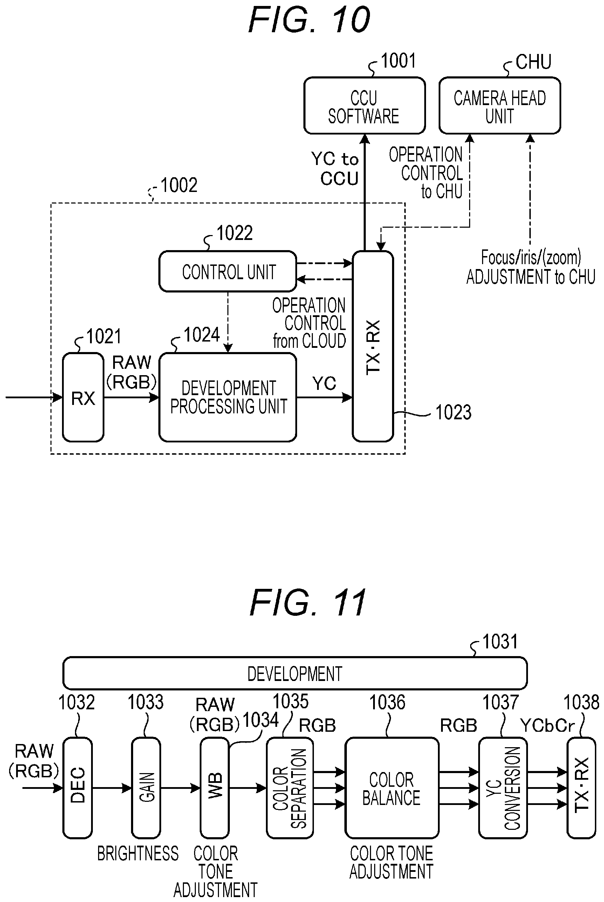

Processing in the CCU hardware 1002 will be described with reference to Fig. 10. Fig. 10 is a diagram illustrating an example of the processing in the CCU hardware. Note that description of points similar to those in Fig. 9 will be omitted as appropriate. Fig. 10 illustrates an internal configuration of the CCU hardware 1002.

The CCU hardware 1002 includes configurations such as an RX 1021, a control unit 1022, and an RX/TX 1023. The RX 1021 has a function as a reception unit. The RX 1021 which is a communication unit of the CCU 300 is an NIC, a communication circuit, or the like. The control unit 1022 is, for example, a processor, and controls each functional block. The control unit 1022 implements a function of performing YC conversion on RGB information by controlling a development processing unit. The control unit 1022 separates operation control information (also referred to as "operation information") from the cloud into information to be processed by itself and information to be sent to the camera head unit CHU. That is, the control unit 1022 has a function of determining whether the operation control information from the cloud is to be processed by itself or to be sent to the camera head unit CHU.

The RX/TX 1023 has functions as a transmission device and a reception device. The RX/TX 1023 which is a communication unit of the CCU 300 is an NIC, a communication circuit, or the like. The RX/TX 1023 transmits and receives the individual video signal, control signal, and the like to and from the CCU software 1001 and the camera head unit CHU.

The RX receives RAW data from the video camera 200. The development processing unit performs development processing on the received RAW data. Note that details of the development processing will be described later.

Then, a TX of the RX/TX 1023 transmits YC (YC data) obtained by performing YC conversion on the RAW data to the CCU software 1001. The CCU software 1001 that has received YC (YC data) executes various processes using the YC data.

The CCU hardware 1002 receives information from the CCU software 1001, for example, operation information (operation signal) by a user operation of VE.

The RX/TX 1023 transmits (transfers) the operation information (operation signal) received from the CCU software 1001 to the control unit 1022. The control unit 1022 determines, from the operation information (operation signal), operation information to be processed in the CCU hardware 1002 and operation information to be processed in the camera head unit CHU. Then, the control unit 1022 transmits (transfers) the operation information (operation signal) to be processed by the camera head unit CHU from TX to the camera head unit CHU.

### [2-4-3. Development processing]

Here, details of the development processing will be described with reference to Fig. 11. Fig. 11 is a diagram illustrating an example of development processing in the single plate method. Note that description of points similar to those in Figs. 9 and 10 will be omitted as appropriate.

DEC 1032 in the processing of development 1031 decodes the RAW data (RAW signal) by a method compatible with the compression encoding method. Gain 1033 in the processing of the development 1031 adjusts the brightness of the video on the basis of the RAW data by adjusting the gain of the RAW data obtained as a result of the decoding by the DEC 1032.

WB 1034 in the processing of the development 1031 adjusts the white balance of the RAW data. Note that, in the development processing, the order of processing of the gain 1033 and the WB 1034 may be reversed.

Color separation 1035 in the processing of the development 1031 is processing of color separation (demosaic) performed in the case of Bayer (mosaic color filter).

Color balance 1036 in the processing of the development 1031 is processing of color tone adjustment performed on RGB information (signals). The color balance 1036 is processing of color tone adjustment performed on the RGB 3-plane video signals separated by color separation. Note that, although Fig. 11 illustrates a case where the color balance is adjusted before YC conversion 1037, the color balance may be adjusted after or both before and after the YC conversion 1037.

The YC conversion 1037 in the processing of the development 1031 converts RGB information (signal) into YC information (signal) such as YCbCr.

After the development processing, a TX of an RX/TX 1038 transmits YC (YC data) to the CCU software 1001.

### [2-4-4. Three-plate method]

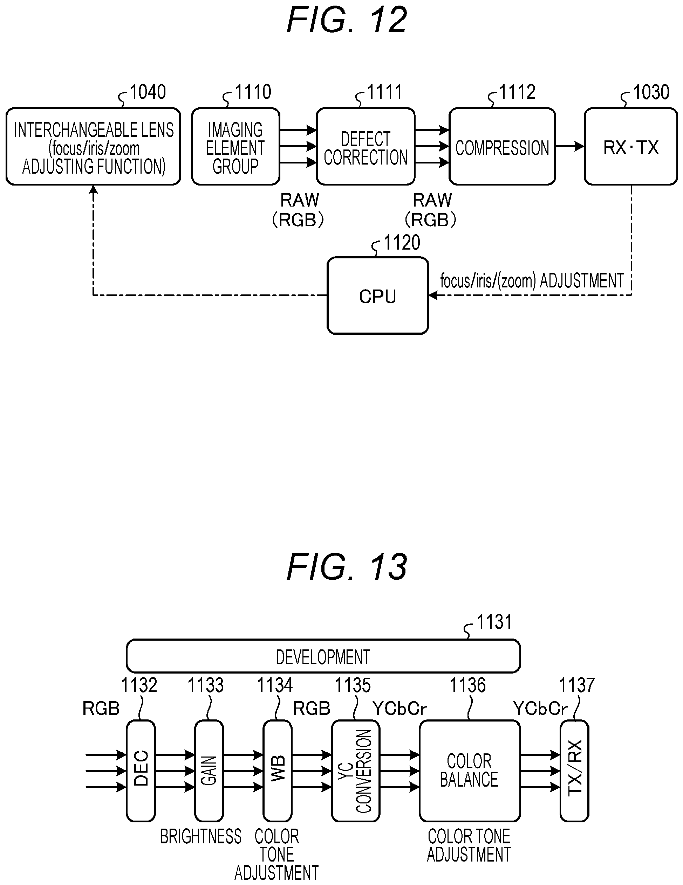

In the above-described example, the case of the single-plate method has been described as an example, but hereinafter, a case of the three-plate method will be described. Fig. 12 is a diagram illustrating an example of processing in a video camera of the three-plate method. Note that description of points similar to those in Figs. 9 to 11 will be omitted as appropriate.

The configuration illustrated in Fig. 12 is different from the camera head unit CHU illustrated in Fig. 9 in having an imaging element group 1110 including three imaging elements.

The imaging element group 1110 includes three (three) image sensors (imaging elements), and outputs video signals corresponding to red (R), green (G), and blue (B), respectively. In the present description, in the case of the three-plate method, video signals including three channels of RGB are collectively referred to as RAW data.

Processing of defect correction 1111 and compression 1112 is performed on the RAW data output from the imaging element group 1110.

### [2-4-5. Development processing (three-plate method)]

Next, development processing in the case of the three-plate method will be described. Fig. 13 is a diagram illustrating an example of development processing in the three-plate method. Note that description of points similar to those in Figs. 9 to 12 will be omitted as appropriate. The development processing illustrated in Fig. 13 is different from the development processing in Fig. 11 in that there is no color separation processing and processing of DEC 1132, gain 1133, and WB 1134 is performed on RAW data.

The DEC 1132 in the processing of development 1131 decodes RAW data (RAW signal) by a method corresponding to an encoding method. The gain 1133 in the processing of the development 1131 adjusts gain (brightness) of RAW data obtained as a result of decoding by the DEC 1132.

The WB 1134 in the processing of the development 1131 adjusts the white balance of the RAW data. Note that, in the development processing, the order of processing of the gain 1133 and the WB 1134 may be reversed.

YC conversion 1135 in the processing of the development 1131 is processing of conversion performed on video data of three channels of red (R), green (G), and blue (B).

Color balance 1136 in the processing of the development 1131 is processing of color tone adjustment performed on the YC information (signal) generated by the YC conversion 1135. Note that, although Fig. 12 illustrates a case where the color balance is adjusted after the YC conversion 1135, the color balance may be adjusted before or both before and after the YC conversion 1135.

After the development processing, a TX of an RX/TX 1137 transmits YC (YC data) to the CCU software 1001.

### [3. Third embodiment]

The system configuration of the live video production system is not limited to the first and second embodiments described above, and may be various system configurations. For example, the live video production system may include a computing environment located in a cellular network, such as MEC. Thus, in a live video production system according to a third embodiment, the cloud function may be divided into the MEC (cellular network side) and the cloud. In this case, the CCU functions may be located in the MEC (cellular network side) instead of the cloud server side.

Furthermore, in addition, in this case, for example, both the MEC side and the cloud side have all functions except the CCU functions, and the functions can be turned ON/OFF as necessary. As described above, the CCU functions are provided on the MEC side. Note that only the minimum configuration necessary for the function to be executed may be provided on both the MEC side and the cloud side.

For example, it is preferable that video editing related processing for which low latency is required is executed by the MEC. Furthermore, it is preferable that processing or the like for which low latency is not required and which has a large processing load is executed by the cloud. For example, in a case where a real-time property is required, such as during sports broadcast, the MEC may generate a replay video, and in a case where the real-time property is not required, such as for news programs, the cloud that is public may generate a highlight video. Further, regarding the STATS, the function of generating the STATS in real time on the basis of the image recognition is preferably executed by the MEC. Furthermore, for the STATS, the function of acquiring the STATS from the network is preferably executed by the cloud.

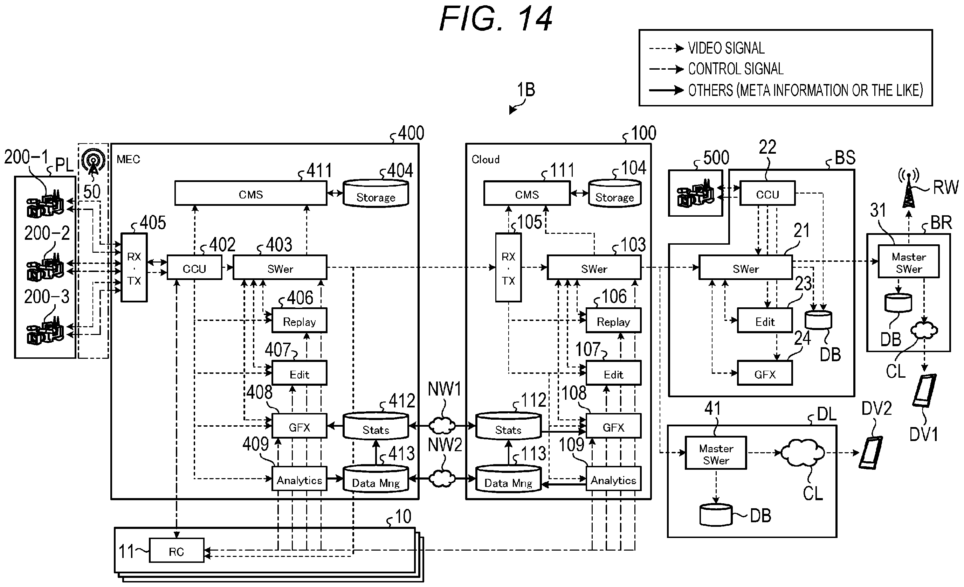

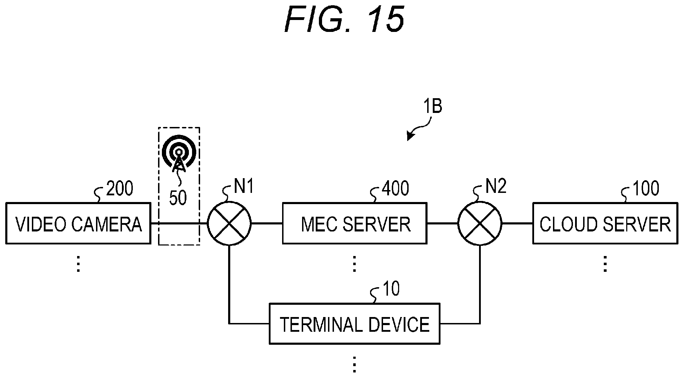

A live video production system 1B including a MEC server 400 will be described below with reference to Figs. 14 and 15. Note that description of points similar to those in the first embodiment and the second embodiment will be omitted as appropriate.

### [3-1. Outline of live video production system according to third embodiment of present disclosure]

An outline of the live video production system according to the third embodiment will be described with reference to Fig. 14. Fig. 14 is a diagram illustrating an example of the live video production system according to the third embodiment of the present disclosure. A configuration of the live video production system 1B illustrated in Fig. 14 will be described. As illustrated in Fig. 14, the live video production system 1B includes various devices related to the imaging PL such as the plurality of video cameras 200, the MEC server 400, the cloud server 100, the terminal device 10, various devices related to the production BS, various devices related to the distribution DL, and various devices related to the broadcast BR. First, each device illustrated in the live video production system 1B will be described.

Note that a dotted line connecting respective components such as devices in Fig. 14 indicates a video signal. Further, a one-dot chain line connecting respective components such as devices in Fig. 14 indicates a control signal. Furthermore, a solid line connecting respective components such as devices in Fig. 14 indicates information other than the video signal and the control signal, for example, other information such as meta information. The direction of an arrow illustrated in Fig. 14 illustrates an example of information flow, and the flow of a video signal, a control signal, meta information, or the like is not limited to the direction of the arrow. Furthermore, the devices illustrated in Fig. 14 are part of devices included in the live video production system 1B, and the live video production system 1B is not limited to the devices illustrated in Fig. 14, and includes various devices necessary for implementing the functions.

First, the MEC server 400 will be described. The MEC server 400 communicates with the plurality of video cameras 200 and the cloud server 100, and transmits signals received from the plurality of video cameras 200 to the cloud server 100. Further, a signal (for example, a video of another video camera or a return video including a main line video, a signal received from the terminal device 10, or the like) received from the cloud server 100 is transmitted to at least one of the plurality of video cameras 200. Furthermore, a signal received from the terminal device 10 is transmitted to at least one of the plurality of video cameras 200. The MEC server 400 has a function of wirelessly transmitting and receiving a video signal and a function of performing output control.

The MEC server 400 has functions similar to those of the cloud server 100 according to the first embodiment, for example. The MEC server 400 executes a process according to the operation signal received from the terminal device 10. The MEC server 400 performs a process of enabling communication by voice between a camera operator operating the video camera 200 selected by the operator and the operator. The MEC server 400 has a function of wireless communication, and performs signal processing related to the video imaged by the video camera 200. Furthermore, the MEC server 400 has a function of aggregating individual video signals, main line video signals, edited video signals, STATS, meta information used for the CMS, and the like in a database (DB) .

The MEC server 400 has an RX/TX 405 that functions as a communication unit. The MEC server 400 transmits and receives information (signal) to and from the video camera 200 by the RX/TX 405. The MEC server 400 transmits and receives the video signal and the control signal to and from the video camera 200 by the RX/TX 405.

The MEC server 400 has at least a part of the functions of the CCU. The MEC server 400 has a CCU 402 that implements at least a part of the functions of the CCU. The CCU software by the MEC server 400 provides functions of converting a video signal and operating and managing setting information of the system camera to the system camera (the video camera 200 or the like).

Furthermore, the MEC server 400 has a function of a switcher that switches a video signal. The MEC server 400 has a SWer 403. The MEC server 400 switches the video to be transmitted to the cloud server 100 by the SWer 403. For example, the MEC server 400 selects the video signal to be transmitted to the cloud server 100 from the individual video signals received from the respective video cameras 200 by the SWer 403.

The SWer 403 of the MEC server 400 switches the input video signal (individual video signal) and the video signal (processed video signal) generated in the MEC server 400, and outputs the signal to the outside of the MEC server 400 (the cloud server 100 or the like). Since the functions of the SWer 403 of the MEC server 400 are similar to those of the SWer 103 of the cloud server 100, description thereof will be omitted.

Furthermore, since the functions of a Replay 406 of the MEC server 400 are similar to the functions of the Replay 106 of the cloud server 100 described in Fig. 3, description thereof will be omitted. Since the functions of an Edit 407 of the MEC server 400 are similar to the functions of the Edit 107 of the cloud server 100 described in Fig. 3, description thereof will be omitted. Since the functions of a GFX 408 of the MEC server 400 are similar to the functions of the GFX 108 of the cloud server 100 described in Fig. 3, description thereof will be omitted. Since the functions of Analytics 409 of the MEC server 400 are similar to the functions of the Analytics 109 of the cloud server 100 described in Fig. 3, description thereof will be omitted.

The MEC server 400 stores various types of information (data). For example, the MEC server 400 has a storage 404 that functions as a storage unit. For example, the MEC server 400 stores the video imaged by each video camera 200 in the storage 404. Furthermore, since the functions of a CMS 411 of the MEC server 400 are similar to the functions of the CMS 111 of the cloud server 100 described in Fig. 3, description thereof will be omitted. Since the functions of Stats 412 of the MEC server 400 are similar to the functions of the Stats 112 of the cloud server 100 described in Fig. 3, description thereof will be omitted. Since the functions of a Data Mng 413 of the MEC server 400 are similar to the functions of the Data Mng 113 of the cloud server 100 described in Fig. 3, description thereof will be omitted.

Each video camera 200 communicates with the MEC server 400 via wireless communication. Each video camera 200 transmits an individual video signal to the MEC server 400 via wireless communication.

The cloud server 100 according to the third embodiment is different from the cloud server 100 according to the first embodiment in not having the CCU functions. The cloud server 100 communicates with the MEC server 400. The cloud server 100 transmits and receives a video signal, a control signal, and the like to and from the MEC server 400 located remotely via wireless communication by the functions of the RX/TX 105.

The terminal device 10 is a computer used for implementing a remote operation by an operator such as VE. The terminal device 10 transmits and receives information to and from the MEC server 400 wirelessly. The terminal device 10 transmits information on the operation received from the operator by the function of the RC 11 to the MEC server 400.

The terminal device 10 has a function as the monitor 12. The terminal device 10 displays the video received from the MEC server 400 by the function of the monitor 12.

### [3.-2. Configuration of live video production system according to third embodiment]

The live video production system 1B illustrated in Fig. 15 will be described. Fig. 15 is a diagram illustrating a configuration example of the live video production system according to the third embodiment of the present disclosure. As illustrated in Fig. 15, the live video production system 1B includes the MEC server 400, the cloud server 100, the video camera 200, and the terminal device 10. The MEC server 400, the cloud server 100, the video camera 200, and the terminal device 10 are communicably connected in a wireless or wired manner via a predetermined communication network. In Fig. 15, the video camera 200 and the MEC server 400 are communicably connected in a wireless or wired manner via the network N1 on the cellular side. In Fig. 15, the video camera 200 communicates via the base station 50 and further communicates with the MEC server 400 via the network N1. For example, wireless communication is performed between the video camera 200 and the base station 50, and wired communication is performed while the base station 50, the core-net, and the network N1 which is the Internet are connected by wire. Furthermore, the example of Fig. 15 illustrates a case where the core-net is not included in the network N1. Note that the network N1 may include a core-net. Furthermore, the cloud server 100 and the MEC server 400 are communicably connected in a wireless or wired manner via the network N2 on the public side. The terminal device 10 is connected to the network N1 or the network N2, and is communicably connected to the cloud server 100, the MEC server 400, and the video camera 200. Fig. 15 is a diagram illustrating a configuration example of a live video production system according to the first embodiment.

Note that the live video production system 1B illustrated in Fig. 15 may include a plurality of MEC servers 400, a plurality of cloud servers 100, a plurality of video cameras 200, and a plurality of terminal devices 10. For example, the example of Fig. 14 illustrates a case where the live video production system 1B includes three video cameras 200. For example, the live video production system 1B may include a plurality of terminal devices 10 respectively corresponding to a plurality of operators. Note that Fig. 15 illustrates only the MEC server 400, the cloud server 100, the video camera 200, and the terminal device 10, but the live video production system 1B is not limited to the MEC server 400, the cloud server 100, the video camera 200, and the terminal device 10, and may include various devices as illustrated in Fig. 14.

The cloud server 100 is an information processing device used to implement cloud computing in the live video production system 1B. The cloud server 100 is a device provided at a predetermined point (base) located remotely from the imaging place (site) where the video camera 200 is located. The cloud server 100 is connected to the MEC server 400.

The MEC server 400 is an information processing device used to implement CCU software in the live video production system 1B. The device configuration of the MEC server 400 is similar to the device configuration of the cloud server 100 in Fig. 4. The MEC server 400 is a wireless base station provided at a predetermined point (base) located remotely from the imaging place (site) where the video camera 200 is located. The MEC server 400 performs signal processing related to the video. The MEC server 400 is connected to the video camera 200 via wireless communication.

The MEC server 400 receives the individual video signals obtained by imaging by the plurality of video cameras 200 via wireless communication, and transmits the main line video signal based on the individual video signals. The MEC server 400 transmits the main line video signal to the cloud server 100. The MEC server 400 performs output control of a video based on a plurality of received individual video signals according to a first operation signal that is an operation signal related to editing of a video received from an outside. The MEC server 400 wirelessly transmits a remote control signal for at least one of the plurality of video cameras 200 according to a second operation signal that is an operation signal related to control of the video camera 200 received from the outside.

The video cameras 200 are wirelessly connected to the MEC server 400. The video cameras 200 transmit and receive individual video signals, control signals, and the like to and from the MEC server 400 by wireless communication. Each video camera 200 transmits the imaged individual video signal to the MEC server 400 by wireless communication.

The terminal device 10 is used by an operator and transmits an operation signal corresponding to an operation of the operator to the MEC server 400. The terminal device 10 transmits information indicating the video camera 200 selected by the operator among the plurality of video cameras 200 to the MEC server 400.

### [4. Other embodiments]

The processing according to each embodiment described above may be performed in various different forms (modification examples) other than each embodiment described above.

### [4-1. Other configuration examples]

For example, the live video production system may include a cloud server 100, a CCU 300 (or BPU), and a MEC server 400. That is, the live video production system may have a system configuration in which the second embodiment and the third embodiment are combined. In this case, the MEC server 400 and the CCU 300 (or BPU) may communicate.

### [4-2. Others]

Furthermore, among the respective processes described in the above-described embodiments, all or a part of the processes described as being performed automatically can be performed manually, or all or a part of the processes described as being performed manually can be performed automatically by a known method. In addition, information including the processing procedures, the specific names, and the various data and parameters illustrated in the document and the drawings described above can be arbitrarily changed unless otherwise specified. For example, the various types of information illustrated in the drawings are not limited to the illustrated information.

Furthermore, each component of each device illustrated in the drawings is functionally conceptual, and is not necessarily physically configured as illustrated. That is, a specific form of distribution and integration of each device is not limited to the illustrated form, and all or a part thereof can be configured in a functionally or physically distributed and integrated manner in an arbitrary unit according to various loads, usage conditions, and the like.

Furthermore, the embodiments and modification examples as have been described above can be appropriately combined within a range in which the processing contents do not contradict each other.

Furthermore, the effects described in the present description are merely examples and are not limited, and other effects may be provided.

### [5. Effects according to embodiment]

As described above, the live video production systems 1, 1A, and 1B according to the embodiments include the plurality of video cameras 200 and the cloud server 100. An imaging operation of the video camera 200 is controlled according to the remote control signal. The cloud server 100 receives the individual video signals obtained by imaging by the plurality of video cameras 200, and transmits a main line video signal (first main line video signal) based on the individual video signals. The cloud server 100 obtains the main line video signal by output control of a video based on a plurality of received individual video signals according to a first operation signal that is an operation signal related to editing of a video received from an outside. The cloud server 100 transmits the remote control signal for at least one of the plurality of video cameras 200 according to a second operation signal that is an operation signal related to control of the video camera 200 received from the outside.

As described above, the live video production systems 1, 1A, and 1B according to the embodiments have the cloud server 100 that wirelessly transmits the remote control signal for remotely controlling the plurality of video cameras 200 and transmits the main line video signal based on the individual video signals. The live video production systems 1, 1A, and 1B provide the cloud server 100 with functions related to video output control and functions related to remote control of the video cameras 200. Thus, in the live video production systems 1, 1A, and 1B, resources can be aggregated at a predetermined base without going to a site (for example, a place such as a stadium where the video cameras 200 are located) by the OBVAN or the like, for example, and thus an increase in resources at the site can be suppressed. For example, the live video production systems 1, 1A, and 1B allow aggregating resources at a location different from a site such as a stadium, such as a base provided with the terminal device 10, and can produce a plurality of live videos with limited personnel. Furthermore, in the live video production systems 1, 1A, and 1B, it is possible to reduce connection between the video camera and the CCU on site, wiring, and preliminary preparation for a test after wiring, and the like, and thus it is also possible to improve the efficiency of workflow. As described above, the live video production systems 1, 1A, and 1B can improve the efficiency of the live video production using the cloud server 100.

Furthermore, each of the live video production systems 1, 1A, and 1B includes the terminal device 10 that is used by an operator and transmits an operation signal corresponding to an operation of the operator to the cloud server 100. The cloud server 100 executes a process corresponding to the operation signal received from the terminal device 10. In the live video production systems 1, 1A, and 1B, the cloud server 100 executes a process corresponding to an operation signal received from the terminal device 10, so that an operator who performs an operation with the terminal device 10 can work at a remote place from a site. Thus, the live video production systems 1, 1A, and 1B can suppress an increase in resources such as staffs arranged at the site, for example, by the OBVAN or the like. For example, the live video production systems 1, 1A, and 1B enable the operator to work using the terminal device 10 at a place different from the place where the cloud server 100 is arranged, and allow flexible arrangement of physical positions of staffs. As described above, the live video production systems 1, 1A, and 1B can improve the efficiency of the live video production using the cloud server 100.

Furthermore, the terminal device 10 transmits information indicating the video camera 200 selected by the operator among the plurality of video cameras 200 to the cloud server 100. The cloud server 100 performs a process of enabling communication by voice between a camera operator operating the video camera 200 selected by the operator and the operator. The live video production systems 1, 1A, and 1B can start voice communication between the operator and the camera operator operating the video camera 200 according to the selection of the operator who operates with the terminal device 10, and can easily allow system users to perform voice communication. As described above, the live video production systems 1, 1A, and 1B can improve the efficiency of the live video production using the cloud server 100.

Furthermore, the cloud server 100 uses information in which each of the plurality of video cameras 200 is associated with a camera operator operating each of the plurality of video cameras 200, to specify a camera operator who operates the video camera 200 selected by the operator, and performs a process of enabling communication by voice between the camera operator and the operator. In the live video production systems 1, 1A, and 1B, the cloud server 100 can specify a camera operator, start voice communication between the specified camera operator and a selected operator, and can easily allow system users to perform voice communication. Thus, the live video production systems 1, 1A, and 1B can smoothly perform communication between the operator and the camera operator. As described above, the live video production systems 1, 1A, and 1B can improve the efficiency of the live video production using the cloud server 100.

Furthermore, the live video production systems 1, 1A, and 1B are provided with the SWer 21 that is arranged in the broadcast station and receives the main line video signal from the cloud server 100. In the live video production systems 1, 1A, and 1B, the cloud server 100 transmits the main line video signal (first main line video signal) to the broadcast station, so that the live broadcast can be appropriately performed using the cloud server 100. As described above, the live video production systems 1, 1A, and 1B can improve the efficiency of the live video production using the cloud server 100.

Furthermore, the live video production systems 1A and 1B include the CCU 300 that communicates with at least one of the plurality of video cameras 200 and the cloud server 100 and performs camera-related processes that are processes related to the video cameras 200. The live video production systems 1A and 1B have the CCU 300 that communicates with the video camera 200 and the cloud server 100 and performs the camera-related processes that are processes related to the video camera 200, so that processes and functions can be distributed to each of the cloud server 100 and the CCU 300. Thus, the live video production systems 1A and 1B can enable optimal arrangement of processes and functions between the cloud server 100 and the CCU 300 according to the purpose of the processes and functions, and the like. As described above, the live video production systems 1, 1A, and 1B can improve the efficiency of the live video production using the cloud server 100.

Furthermore, the signal processing device is a camera control unit (CCU) 300 or a baseband processing unit (BPU). Since the live video production systems 1A and 1B have the CCU or the BPU, for example, the functions included in the conventional CCU or BPU can be distributed to each of the cloud server 100 and the CCU 300. Thus, the live video production systems 1A and 1B can enable optimal arrangement of processes and functions between the cloud server 100 and the CCU 300 according to the purpose of the processes and functions, and the like. As described above, the live video production systems 1A and 1B can improve the efficiency of the live video production using the cloud server 100.

Furthermore, the cloud server 100 performs the first process (non-video processing process) among the camera-related processes. For example, the CCU 300 performs the second process (video processing process) other than the non-video processing process among the camera-related processes. The live video production systems 1A and 1B can distribute the processes by causing the cloud server 100 to perform a non-video processing process among the camera-related processes and causing the CCU 300 or the BPU to perform a video processing process other than the non-video processing process. As described above, the live video production systems 1A and 1B can improve the efficiency of the live video production using the cloud server 100.

Furthermore, the non-video processing process includes a process related to control of the video camera 200. The video processing process includes a process on the video imaged by the video camera 200. The live video production systems 1A and 1B can distribute the processes by causing the cloud server 100 to perform a process related to the control of the video camera 200 and causing the CCU 300 to perform a process on the video imaged by the video camera 200, for example. Thus, for example, the live video production systems 1A and 1B can cause the CCU 300 to perform the video processing process such as a video process (image processing), and cause the cloud server 100 to perform a camera control process such as a control process (control), thereby enabling optimal sharing of processes according to the processing contents. As described above, the live video production systems 1A and 1B can improve the efficiency of the live video production using the cloud server 100.

Furthermore, the non-video processing process includes a process of adjusting at least one of the diaphragm or the focus of the video camera 200. The video processing process includes a process of adjusting at least one of gain, color balance, or white balance for the video imaged by the video camera 200 as a target. The live video production systems 1A and 1B can cause the cloud server 100 to perform a process targeted at the structure of the video camera 200, such as diaphragm or focus of the video camera 200, and cause the CCU 300 or the BPU to perform a process targeted at the video imaged by the video camera 200, thereby enabling optimal arrangement according to the purpose of the processes and functions, and the like. As described above, the live video production systems 1A and 1B can improve the efficiency of the live video production using the cloud server 100.

Furthermore, a plurality of CCUs 300 is provided respectively in association with the plurality of video cameras 200. As described above, since the live video production systems 1A and 1B have the plurality of signal processing devices respectively associated with the plurality of video cameras 200, it is possible to enable appropriate processing for each video camera 200.

Furthermore, the cloud server 100 performs output control corresponding to at least one of output switching, video synthesis, still image generation, moving image generation, and replay video generation. Thus, the live video production systems 1, 1A, and 1B can arrange an operator who performs operations regarding output switching, video synthesis, still image generation, moving image generation, replay video generation, or the like in a remote place such as a base provided with the terminal device 10. As described above, in the live video production systems 1, 1A, and 1B, the cloud server 100 performs various types of output control, so that it is not necessary to arrange the operator on site by, for example, the OBVAN or the like. Therefore, the live video production systems 1, 1A, and 1B can suppress an increase in resources at the site. As described above, the live video production systems 1, 1A, and 1B can improve the efficiency of the live video production using the cloud server 100.

Furthermore, the cloud server 100 performs output control corresponding to at least one of a switcher (Switcher), an edit (Edit), a graphics (GFX), or a replay (Replay). Thus, the live video production systems 1, 1A, and 1B can arrange an operator who performs an operation related to the switcher, the edit, the GFX, the replay, and the like in a remote place such as a base provided with the terminal device 10. As described above, in the live video production systems 1A and 1B, since the cloud server 100 performs various types of processing such as switcher, edit, GFX, and replay, it becomes unnecessary to arrange the operator at the site by, for example, the OBVAN or the like. Therefore, the live video production systems 1A and 1B can suppress an increase in resources at the site. As described above, the live video production systems 1A and 1B can improve the efficiency of the live video production using the cloud server 100.

Furthermore, the cloud server 100 transmits a remote control signal for remotely controlling the video camera 200 to at least one of the plurality of video cameras 200. Thus, the live video production systems 1, 1A, and 1B can arrange VE at a remote location from the video camera 200. In the live video production systems 1, 1A, and 1B, the cloud server 100 transmits the remote control signal for remotely controlling the video camera 200 to the video camera 200, so that it is not necessary to arrange staffs for controlling the video camera 200 and the like at the site by, for example, the OBVAN or the like. Therefore, the live video production systems 1, 1A, and 1B can suppress an increase in resources at the site. As described above, the live video production systems 1, 1A, and 1B can improve the efficiency of the live video production using the cloud server 100.

Furthermore, the cloud server 100 transmits a remote control signal for adjusting at least one of pan, tilt, or zoom. Thus, the live video production systems 1, 1A, and 1B can arrange VE at a remote location from the video camera 200. In the live video production systems 1A and 1B, the cloud server 100 transmits the remote control signal for remotely controlling PTZ of the video camera 200 to the video camera 200, so that it is not necessary to arrange staffs for controlling the video camera 200 and the like at the site by, for example, the OBVAN or the like. Therefore, the live video production systems 1A and 1B can suppress an increase in resources at the site. As described above, the live video production systems 1A and 1B can improve the efficiency of the live video production using the cloud server 100.

In addition, the cloud server 100 transmits a remote control signal for remotely controlling the position of the video camera 200 to the position changing mechanism of the video camera 200. For example, the live video production systems 1A and 1B can remotely and easily control the position of the video camera 200 at the site. Thus, the live video production systems 1, 1A, and 1B can remotely change the position of the video camera 200, and can reduce the number of camera operators operating the video camera 200. Therefore, the live video production systems 1A and 1B can suppress an increase in resources at the site. As described above, the live video production systems 1A and 1B can improve the efficiency of the live video production using the cloud server 100.

Furthermore, the live video production system 1B includes the MEC server 400 that communicates with the plurality of video cameras 200 and the cloud server 100, transmits signals received from the plurality of video cameras 200 to the cloud server 100, and transmits signals received from the cloud server 100 to at least one of the plurality of video cameras 200. The live video production system 1B has the MEC server 400 that communicates with the video camera 200 and the cloud server 100 and performs communication between the video camera 200 and the cloud server 100, so that the processes and functions can be distributed to each of the cloud server 100 and the MEC server 400, for example. Thus, the live video production system 1B can enable optimal arrangement of processes and functions between the cloud server 100 and the MEC server 400 according to the purpose of the processes and functions, and the like. As described above, the live video production system 1B can improve the efficiency of the live video production using the cloud server 100.

Furthermore, a multi-access edge computing (MEC) server 400 has a function of wirelessly transmitting and receiving a video signal and a function of performing output control. The live video production system 1B can distribute the processes and functions to each of the cloud server 100 and the MEC server 400 by providing the MEC server 400 in addition to the cloud server 100. Thus, the live video production system 1B can distribute the processes between the cloud server 100 and the MEC server. For example, the live video production system 1B can cause the MEC server 400 to execute video editing related processing (such as SWer/GFX/Edit) for which low latency is required. Furthermore, the live video production system 1B can cause the cloud server 100 to execute processing or the like for which low latency is not required and which has a large processing load. As described above, the live video production system 1B can improve the efficiency of the live video production using the cloud server 100.

Furthermore, the cloud server 100 has a video analysis function, and extracts or generates information by using an analysis result. For example, the cloud server 100 can analyze a video and extract or generate information such as Stats information using the analysis result. In the live video production system 1B, the cloud server 100 has a video analysis function, and extracts or generates information by using an analysis result, so that it is possible to produce a live video using the analysis result of the cloud server 100. Thus, the live video production system 1B can improve the efficiency of the live video production using the cloud server 100.

The cloud server 100 wirelessly receives a plurality of individual video signals and wirelessly transmits a remote control signal. As described above, in the live video production systems 1, 1A, and 1B, the cloud server 100 can wirelessly communicate various signals.

The cloud server 100 receives a plurality of individual video signals by the 5G communication, and transmits a remote control signal by the 5G communication. As described above, in the live video production systems 1, 1A, and 1B, the cloud server 100 can communicate various signals at high speed by the 5G communication.

The cloud server 100 wirelessly receives a plurality of individual video signals obtained by imaging by a plurality of cameras whose imaging operation is controlled according to a remote control signal, transmits a main line video signal based on the plurality of individual video signals, obtains the main line video signal by output control of a video based on a plurality of received individual video signals according to a first operation signal that is an operation signal related to editing of a video received from an outside, and wirelessly transmits the remote control signal for at least one of the plurality of cameras according to a second operation signal that is an operation signal related to control of a camera received from the outside. As described above, the cloud server 100 wirelessly transmits the remote control signal for remotely controlling the plurality of video cameras 200, and transmits the main line video signal based on the individual video signals. The cloud server 100 has a function related to video output control and a function related to remote control of the video camera 200. Thus, in the live video production system (the live video production system 1, 1A, 1B, or the like) using the cloud server 100, resources can be aggregated at a predetermined base without going to the site by, for example, the OBVAN or the like, so that an increase in resources at the site can be suppressed. For example, the live video production systems 1, 1A, and 1B using the cloud server 100 allow aggregating resources at a location different from a site such as a stadium, such as a base provided with the terminal device 10, and can produce a plurality of live videos with limited personnel. Furthermore, in the live video production systems 1, 1A, and 1B using the cloud server 100, it is possible to reduce connection between the video camera and the CCU on site, wiring, and preliminary preparation for a test after wiring, and the like, and thus it is also possible to improve the efficiency of workflow. In this manner, the cloud server 100 can improve the efficiency of live video production.

### [6. Hardware configuration]

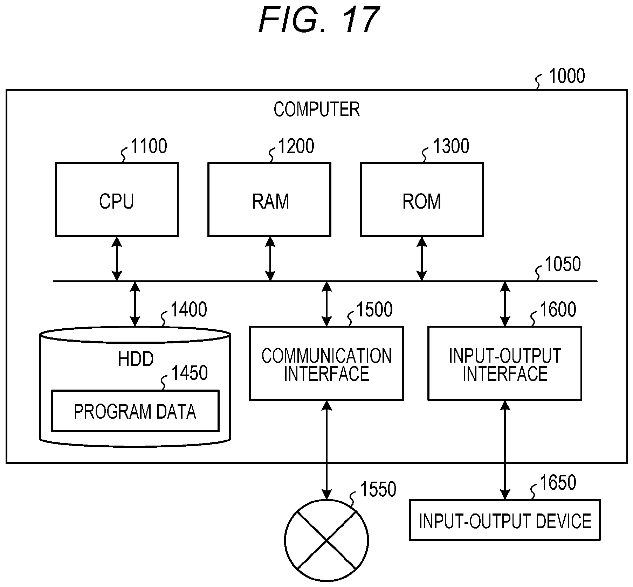

The signal processing device such as the cloud server 100 or the CCU 300, the MEC server 400, or the terminal device 10 according to each embodiment described above is implemented by a computer 1000 having a configuration as illustrated in Fig. 17, for example. Fig. 17 is a hardware configuration diagram illustrating an example of the computer 1000 that implements the functions of the cloud server. Hereinafter, the cloud server 100 will be described as an example. The computer 1000 has a CPU 1100, a RAM 1200, a read only memory (ROM) 1300, a hard disk drive (HDD) 1400, a communication interface 1500, and an input-output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the R_AM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records an information processing program such as a signal processing program according to the present disclosure, which is an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input-output interface 1600 is an interface for connecting the input-output device 1650 and the computer 1000. For example, the CPU 1100 receives data from an input device such as a keyboard and a mouse via the input-output interface 1600. In addition, the CPU 1100 transmits data to an output device such as a display, a speaker, or a printer via the input-output interface 1600. Furthermore, the input-output interface 1600 may function as a media interface that reads a program or the like recorded in a predetermined recording medium (). The predetermined recording medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the cloud server 100 according to the embodiment, the CPU 1100 of the computer 1000 implements the functions of the control unit 130 and the like by executing the information processing program loaded on the RAM 1200. Furthermore, the HDD 1400 stores the information processing program according to the present disclosure and data in a storage unit of the cloud server 100. Note that the CPU 1100 reads the program data 1450 from the HDD 1400 and executes the program data, but as another example, these programs may be acquired from another device via the external network 1550.

Note that the present technology can have configurations as follows.
(1) A live video production system, including:
   a plurality of cameras whose imaging operation is controlled according to a remote control signal; and
   a cloud server that receives individual video signals obtained by imaging by the plurality of cameras and transmits a main line video signal based on the individual video signals, in which
   the cloud server obtains the main line video signal by output control of a video based on a plurality of received individual video signals according to a first operation signal that is an operation signal related to editing of a video received from an outside, and transmits the remote control signal for at least one of the plurality of cameras according to a second operation signal that is an operation signal related to control of a camera received from the outside.
(2) The live video production system according to (1), further including
   a terminal device that is used by an operator and transmits an operation signal corresponding to an operation of the operator to the cloud server, in which
   the cloud server executes a process corresponding to an operation signal received from the terminal device.
(3) The live video production system according to (2), in which
   the terminal device transmits information indicating a camera selected by the operator from the plurality of cameras to the cloud server, and
   the cloud server performs a process of enabling communication by voice between a camera operator operating the camera selected by the operator and the operator.
(4) The live video production system according to (3), in which
   the cloud server uses information in which each of the plurality of cameras and a camera operator operating each of the plurality of cameras are associated with each other to specify a camera operator operating a camera selected by the operator, and performs a process of enabling communication by voice between the camera operator and the operator.
(5) The live video production system according to any one of (1) to (4), further including
   a reception device that is arranged in a broadcast station and receives the main line video signal from the cloud server.
(6) The live video production system according to (1), further including
   a signal processing device that communicates with at least one of the plurality of cameras and the cloud server, and performs camera-related processes that are processes related to a camera.
(7) The live video production system according to (6), in which
   the signal processing device is a camera control unit (CCU) or a baseband processing unit (BPU).
(8) The live video production system according to (6) or (7), in which
   the cloud server performs a first process among the camera-related processes, and
   the signal processing device performs a second process other than the first process among the camera-related processes.
(9) The live video production system according to (8), in which
   the first process includes a process related to control of a camera, and
   the second process includes processing on a video imaged by a camera.
(10) The live video production system according to (8) or (9), in which
   the first process includes a process of adjusting at least one of a diaphragm or a focus of a camera, and
   the second process includes a process of adjusting at least one of gain, color balance, or white balance for a video imaged by a camera as a target.
(11) The live video production system according to any one of (6) to (10), in which
   a plurality of the signal processing devices is provided respectively in association with the plurality of cameras.
(12) The live video production system according to any one of (1) to (11), in which
   the cloud server performs the output control corresponding to at least one of output switching, video synthesis, still image generation, moving image generation, or replay video generation.
(13) The live video production system according to any one of (1) to (12), in which
   the cloud server performs the output control corresponding to at least one of a switcher (Switcher), an edit (Edit), a graphics (GFX), or a replay (Replay).
(14) The live video production system according to any one of (1) to (13), in which
   the cloud server transmits the remote control signal that remotely controls a camera to at least one of the plurality of cameras.
(15) The live video production system according to (14), in which
   the cloud server transmits the remote control signal that adjusts at least one of panning, tilting, or zooming.
(16) The live video production system according to any one of (1) to (15), in which
   the cloud server transmits the remote control signal for remotely controlling a position of a camera to a position changing mechanism of the camera.
(17) The live video production system according to any one of (1) to (16), further including:
   another server that communicates with the plurality of cameras and the cloud server, transmits a signal received from the plurality of cameras to the cloud server, and transmits a signal received from the cloud server to at least one of the plurality of cameras.
(18) The live video production system according to (17), in which
   the another server is a multi-access edge computing (MEC) server having a function of wirelessly transmitting and receiving a video signal and a function of performing the output control.
(19) The live video production system according to any one of (1) to (18), in which
   the cloud server has a video analysis function, and extracts or generates information by using an analysis result.
(20) The live video production system according to any one of (1) to (19), in which
   the cloud server wirelessly receives the plurality of individual video signals and wirelessly transmits the remote control signal.
(21) The live video production system according to (20), in which
   the cloud server receives the plurality of individual video signals by fifth-generation technology standard (5G) communication and transmits the remote control signal by the 5G communication.
(22) A live video production method for executing a process including:
   controlling an imaging operation of a plurality of cameras according to a remote control signal; and
   by a cloud server, receiving individual video signals obtained by imaging by the plurality of cameras and transmitting a main line video signal based on the individual video signals, obtaining the main line video signal by output control of a video based on a plurality of received individual video signals according to a first operation signal that is an operation signal related to editing of a video received from an outside, and transmitting the remote control signal for at least one of the plurality of cameras according to a second operation signal that is an operation signal related to control of a camera received from the outside.
(23) A cloud server, in which
   the cloud server wirelessly receives a plurality of individual video signals obtained by imaging by a plurality of cameras whose imaging operation is controlled according to a remote control signal, transmits a main line video signal based on the plurality of individual video signals, obtains the main line video signal by output control of a video based on a plurality of received individual video signals according to a first operation signal that is an operation signal related to editing of a video received from an outside, and wirelessly transmits the remote control signal for at least one of the plurality of cameras according to a second operation signal that is an operation signal related to control of a camera received from the outside.

### REFERENCE SIGNS LIST

- 1: Live video production system
- 10: Terminal device (remote controller)
- 100: Cloud server
- 110: Communication unit
- 120: Storage unit
- 130: Control unit
- 131: Communication control unit
- 132: Processing unit
- 200: Video camera (camera)

## Claims

1. A live video production system, comprising:
a plurality of cameras whose imaging operation is controlled according to a remote control signal; and
a cloud server that receives a plurality of individual video signals obtained by imaging by the plurality of cameras and transmits a main line video signal based on the plurality of individual video signals, wherein
the cloud server obtains the main line video signal by output control of a video based on a plurality of received individual video signals according to a first operation signal that is an operation signal related to editing of a video received from an outside, and transmits the remote control signal for at least one of the plurality of cameras according to a second operation signal that is an operation signal related to control of a camera received from the outside.

2. The live video production system according to claim 1, further comprising
a terminal device that is used by an operator and transmits an operation signal corresponding to an operation of the operator to the cloud server, wherein
the cloud server executes a process corresponding to an operation signal received from the terminal device.

3. The live video production system according to claim 2, wherein
the terminal device transmits information indicating a camera selected by the operator from the plurality of cameras to the cloud server, and
the cloud server performs a process of enabling communication by voice between a camera operator operating the camera selected by the operator and the operator.

4. The live video production system according to claim 3, wherein
the cloud server uses information in which each of the plurality of cameras and a camera operator operating each of the plurality of cameras are associated with each other to specify a camera operator operating a camera selected by the operator, and performs a process of enabling communication by voice between the camera operator and the operator.

5. The live video production system according to claim 1, further comprising
a reception device that is arranged in a broadcast station and receives the main line video signal from the cloud server.

6. The live video production system according to claim 1, further comprising
a signal processing device that communicates with at least one of the plurality of cameras and the cloud server, and performs camera-related processes that are processes related to a camera.

7. The live video production system according to claim 6, wherein
the signal processing device is a camera control unit (CCU) or a baseband processing unit (BPU).

8. The live video production system according to claim 6, wherein
the cloud server performs a first process among the camera-related processes, and
the signal processing device performs a second process other than the first process among the camera-related processes.

9. The live video production system according to claim 8, wherein
the first process includes a process related to control of a camera, and
the second process includes processing on a video imaged by a camera.

10. The live video production system according to claim 8, wherein
the first process includes a process of adjusting at least one of a diaphragm or a focus of a camera, and
the second process includes a process of adjusting at least one of gain, color balance, or white balance for a video imaged by a camera as a target.

11. The live video production system according to claim 6, wherein
a plurality of the signal processing devices is provided respectively in association with the plurality of cameras.

12. The live video production system according to claim 1, wherein
the cloud server performs the output control corresponding to at least one of output switching, video synthesis, still image generation, moving image generation, or replay video generation.

13. The live video production system according to claim 1, wherein
the cloud server performs the output control corresponding to at least one of a switcher, an edit, a graphics, or a replay.

14. The live video production system according to claim 1, wherein
the cloud server transmits the remote control signal that remotely controls a camera to at least one of the plurality of cameras.

15. The live video production system according to claim 14, wherein
the cloud server transmits the remote control signal that adjusts at least one of panning, tilting, or zooming.

16. The live video production system according to claim 1, wherein
the cloud server transmits the remote control signal for remotely controlling a position of a camera to a position changing mechanism of the camera.

17. The live video production system according to claim 1, further comprising
another server that communicates with the plurality of cameras and the cloud server, transmits a signal received from the plurality of cameras to the cloud server, and transmits a signal received from the cloud server to at least one of the plurality of cameras.

18. The live video production system according to claim 17, wherein
the another server is a multi-access edge computing (MEC) server having a function of wirelessly transmitting and receiving a video signal and a function of performing the output control.

19. The live video production system according to claim 1, wherein
the cloud server has a video analysis function, and extracts or generates information by using an analysis result.

20. The live video production system according to claim 1, wherein
the cloud server wirelessly receives the plurality of individual video signals and wirelessly transmits the remote control signal.

21. The live video production system according to claim 20, wherein
the cloud server receives the plurality of individual video signals by fifth-generation technology standard (5G) communication and transmits the remote control signal by the 5G communication.

22. A live video production method for executing a process comprising:
controlling an imaging operation of a plurality of cameras according to a remote control signal; and
by a cloud server, receiving individual video signals obtained by imaging by the plurality of cameras and transmitting a main line video signal based on the individual video signals, obtaining the main line video signal by output control of a video based on a plurality of received individual video signals according to a first operation signal that is an operation signal related to editing of a video received from an outside, and transmitting the remote control signal for at least one of the plurality of cameras according to a second operation signal that is an operation signal related to control of a camera received from the outside.

23. A cloud server, wherein
the cloud server wirelessly receives a plurality of individual video signals obtained by imaging by a plurality of cameras whose imaging operation is controlled according to a remote control signal, transmits a main line video signal based on the plurality of individual video signals, obtains the main line video signal by output control of a video based on a plurality of received individual video signals according to a first operation signal that is an operation signal related to editing of a video received from an outside, and
wirelessly transmits the remote control signal for at least one of the plurality of cameras according to a second operation signal that is an operation signal related to control of a camera received from the outside.
